# EUROPÄISCHE PATENTSCHRIFT

(11) **EP 3 574 625 B1**
(45) Veröffentlichungstag und Bekanntmachung des Hinweises auf die Patenterteilung: **01.09.2021**
(21) Anmeldenummer: 18705312.9
(22) Anmeldetag: 29.01.2018
(51) Int. Cl.: H04L 29/06, H04L 9/32

(54) **VERFAHREN ZUM DURCHFÜHREN EINER AUTHENTIFIZIERUNG**
METHOD FOR CARRYING OUT AN AUTHENTICATION
PROCÉDÉ DE RÉALISATION D'UNE AUTHENTIFICATION

(30) Priorität: 27.01.2017 DE 102017000768
(43) Veröffentlichungstag der Anmeldung: 04.12.2019
(73) Patentinhaber: Giesecke+Devrient Mobile Security GmbH, 81677 München (DE)
(72) Erfinder: STÖHR, Volker, 81827 München (DE); KAMM, Frank-Michael, 83607 Holzkirchen (DE); GERHARDT, Nils, 80333 München (DE); CHALUPAR, Andreas, 81829 München (DE)
(86) Internationale Anmeldenummer: PCT/EP2018/000040
(87) Internationale Veröffentlichungsnummer: WO 2018/137888

(56) Entgegenhaltungen:
- WO-A1-2016/044373
- DE-B3-102011 089 580
- US-A1- 2013 054 474
- US-A1- 2014 189 350

## Beschreibung

Die Erfindung betrifft ein Verfahren zur Durchführung einer kryptographisch gesicherten Authentisierung, welche konform ist zu dem Universal Authentication Framework UAF der FIDO-Allianz. Auf diese Weise kann eine bestehende Infrastruktur verwendet werden, die gemäß den Spezifikationen der FIDO-Allianz erstellt wurde und das vorgeschlagene Verfahren kann mit Standardschnittstellen in die Infrastruktur eingebettet werden.

Die vorliegende Erfindung betrifft ferner ein Verfahren zum Durchführen einer Zweifaktorauthentisierung zwischen einem Client und einer Relying Party.

Bei einem Client handelt es sich beispielsweise um ein Mobiltelefon, einen Tablet-PC, einen Computer (PC) oder dergleichen. Bei einer Relying Party handelt es sich beispielsweise um eine Einrichtung, wie einen Host, einen Server oder dgl., die Zugang zu einem Service, insbesondere einer sicheren Softwareapplikation ermöglicht.

Das Universal Authentication Framework UAF stellt ein universelles Rahmenwerk zur Authentifizierung bereit, wobei es möglich ist, eine Authentifizierung ohne Kennwort durchzuführen. Dieses Rahmenwerk unterstützt beispielsweise biometrische Merkmale. Während gemäß den FIDO-Standards zwei Varianten existieren, nämlich Universal Authentication Framework UAF und Universal 2nd Factor U2F authentisiert sich der Benutzer gemäß dem UAF-Standard gegenüber seinem persönlichen mobilen Endgerät mittels seines Wissens, wie zum Beispiel einer PIN oder einem Passwort und/oder biometrischen Merkmalen.

Bei der Zweifaktorauthentifizierung kommt bevorzugt der Industriestandard U2F (Universal Second Factor, universeller zweiter Faktor) zum Einsatz. Die U2F-Spezifikation wird von der FIDO-Allianz (Fast Identity Online) verwaltet.

Bekannt ist das sogenannte Universal Authentication Framework UAF, das von der FIDO-Allianz standardisiert wird. Entsprechende Spezifikationen sind frei auf der Webseite https://fidoalliance.org/download/ verfügbar. Dies gilt sowohl für die UAF-Spezifikationen, als auch für die U2F-Spezifikationen. Insbesondere lassen sich neben der UAF-Spezifikation 1.1 die weiteren Spezifikationen FIDO UAF Protocol Specification und FIDO 2.0 Spezifikationen herunterladen.

Die Zweifaktorauthentifizierung wird in der Regel initiiert indem zur Authentifizierung ein Dienstanbieter (Relying Party) als ersten Faktor nach dem Nutzernamen und ggf. nach dem zugehörigen Passwort fragt, wobei der Nutzernamen den Nutzer identifiziert und das Passwort den Nutzer authentisiert. Der Dienstanbieter prüft diese Daten und leitet, wenn die Daten in Ordnung sind, die Überprüfung des zweiten Faktors (Besitz) in Form von U2F ein.

In einem ersten Schritt schickt der Dienstanbieter (Relying Party) ein Datenpaket an einen Kundenrechner, wie beispielsweise einen Web-Browser. Dieses umfasst eine Challenge, dies sind einige zufällig gewählte Daten, eine Applikationskennung (App-ID), und eine Schlüsselkennung (KeyHandle), welche bei der initialen Anmeldung hinterlegt wurde.

Der Kundenrechner prüft die Applikationskennung, ergänzt diese um zusätzliche Daten wie beispielsweise eine Kanalkennung (Channel ID) und leitet diese Daten gehasht an das U2F-Gerät weiter. Bei dem U2F-Gerät kann es sich beispielsweise um einen USB-Dongle mit einem Taster handeln.

Das U2F-Gerät ermittelt mit Hilfe der Schlüsselkennung (KeyHandle) den für diese Sitzung passenden privaten Schlüssel (kpriv), und signiert mit diesem die gehashten Werte der Applikationskennung und der Challenge und bildet so die signierte Retourantwort.

Zusätzlich wird ein Zähler (Counter) in die Antwort integriert, um duplizierte U2F-Geräte erkennen zu können. Der Kundenrechner, wie beispielsweise der Web-Browser, leitet diese Daten an den Dienstanbieter weiter, der mit dem PublicKey die Signatur s und die darin enthaltenen Daten prüft und, falls diese in Ordnung sind, den Zugang gewährt.

US 2014/189350 A1 offenbart ein Verfahren zur Authentisierung zwischen einem Client und einem Server mithilfe verschiedener möglicher Authentisierungsmittel. Der Client besitzt einen gesicherten Transaktionsdienst, einen gesicherten Speicher sowie mehrere Authentisierungsmittel, die mit dem gesicherten Transaktionsdienst verbunden sind. Auf dem Client wird ein Browser ausgeführt. Bei den Authentisierungsmitteln kann es sich um eine biometrische Einheit zur Fingerabdruckerkennung, Stimmerkennung oder Gesichtserkennung oder um ein vertrauenswürdiges Element wie ein TPM (trusted platform module) oder eine Smartcard handeln. Auf dem Server wird eine Website ausgeführt, über die ein Zugang zu Transaktionsservern erfolgt. Für eine Authentisierung meldet sich ein Nutzer über den Browser mit Benutzername und Passwort bei der Website an. Die Website schickt darauf eine Anfrage zur Übermittlung der registrierten Authentisierungsmittel an den Client. Dieser ermittelt mithilfe des gesicherten Speichers die vorhandenen Authentisierungsmittel und schickt eine Liste an den Server. Der Server wählt aus der Liste ein Authentisierungsmittel aus und schickt eine Geräteinformation zusammen mit einer Challenge an den Client. Die Website fordert den Nutzer auf, die zu dem Authentisierungsmittel korrespondierende Authentisierungsaktion durchzuführen, zum Beispiel einen Fingerabdruck oder eine Stimmprobe zu präsentieren. Der gesicherte Transaktionsdienst identifiziert den Nutzer, erzeugt ein Authentisierungstoken und schickt dieses an den Server. WO 2016/044373 A1 stellt einen weiteren relevanten Stand der Technik dar.

Herausforderung bei FIDO-U2F ist, dass es dafür ausgelegt ist an einem PC oder dergleichen eingesetzt zu werden, an dem auch ein USB-Dongle als zweiter Faktor in eine USB-Schnittstelle eingesetzt werden kann. Es ist zwar möglich den zweiten Faktor über NFC oder Bluetooth vorzuweisen, jedoch werden in diesem Fall spezielle Authentikatoren gefordert, die in der Regel eigens und ausschließlich für die Verwendung für FIDO beschafft werden müssen.

Es besteht jedoch der Wunsch eine Zweifaktorauthentifizierung, die konform ist mit FIDO-U2F, auch an weiteren elektronischen Einrichtungen, wie beispielsweise einem Mobiltelefon vornehmen zu können. Insofern ist es weiterhin ein Wusch als zweiten Faktor einen beim Nutzer bereits vorhandenen Datenträger mit einer Kontaktlosschnittstelle, wie beispielsweise eine Kreditkarte, in Verbindung mit einem Mobiltelefon einsetzen zu können, um eine Zweifaktorauthentifizierung gemäß FIDO-U2F durchzuführen.

FIDO-U2F fordert für die Signierung die Verwendung von elliptischen Kurven. Diese Funktion weisen Kreditkarten bzw. Paymentkarten im Allgemeinen nicht auf. Alternativ ist die Nutzung von RSA zur Signierung gemäß FIDO-UAF zugelassen. Dabei fordert FIDO zusätzlich zur RSA-Signierung auch die Erzeugung von RSA-Schlüsselpaaren. Diese Erzeugung von RSA-Schlüsseln würde auf der Karte zu viel Rechenzeit in Anspruch nehmen, so dass die Ausführungszeit für den Nutzer nicht akzeptable wäre, und ist auf derzeitigen Kreditkarten nicht implementiert.

Alternativ könnte der neue Personalausweis der BRD (nPA) als zweiter Faktor eingesetzt werden und per Funkverbindung mit dem Mobiltelefon gekoppelt werden. Allerdings ist derzeit die eID-Funktionalität erst bei 30-35% der sich im Feld befindenden Ausweise freigeschaltet. Weiterhin erfordert die eID-Funktionalität bei jeder Nutzung die zusätzliche Eingabe eines sechsstelligen Passworts, welches eingegeben werden muss, während der nPA an die NFC-Schnittstelle des Mobiltelefons gehalten wird.

Die bestehenden Payment-Karten-Plattformen sind nicht oder nur mit größeren Nachteilen als FIDO-Authentikatoren geeignet. FIDO erfordert elliptische Kurven, die auf Payment Karten nicht vorhanden sind. Das UAF Protokoll ermöglicht auch die Nutzung von RSA, jedoch ist die RSA Schlüsselgenerierung auf den Payment Karten ebenfalls nicht vorhanden und wäre außerdem sehr langsam. Durch die größeren Schlüssellängen ergeben sich auch deutlich längere Transaktionszeiten über die NFC Schnittstelle.

Bei FIDO UAF benötigt der Benutzer ein Device, also ein Endgerät, das die Möglichkeit bietet, einen kryptographischen Schlüssel für die Authentisierung zu erzeugen und sicher zu speichern. Die Verwendung des kryptographischen Schlüssels muss durch Authentisierung, z.B. Passworteingabe abgesichert sein.

Der Schlüssel kann entweder auf dem Device gespeichert werden, mit dem die Authentisierung durchgeführt wird, mit dem Nachteil, dass der Schlüssel an das Device gebunden ist und abhängig von der Art der Speicherung (in Software oder zusätzlich gesichert durch hardwarebasierte Komponenten im Device) die Gefahr der Ausspähung oder nicht berechtigten Verwendung des Schlüssels birgt.

Alternativ kann der Schlüssel auf einem zweiten Device,(z.B. eine NFC-Karte, die an das Smartphone gehalten wird, erzeugt und gespeichert werden, mit dem Nachteil, dass ein zweites Device gekauft und bereit gehalten werden muss. Das zusätzliche Device muss ausreichend Speicherkapazität für die Speicherung mehrerer Schlüssel zur Verfügung stellen und die Möglichkeit der Absicherung des Zugriffs auf den Schlüssel,z.B. mittels Passworts, und dessen Verwaltung zur Verfügung stellen.

Für die UAF-Authentisierung soll ein Device verwendet werden, das der Benutzer ohnehin schon besitzt. Das System soll so gestaltet sein, dass auch Devices, die nicht für FIDO konzipiert wurden, als primärer Authentisierungsfaktor genutzt werden können. Das System soll neben dem Device auch eine Authentisierung des Benutzers (z.B. mittels Passworts) gegenüber dem Device erfordern. Das Verfahren soll so durchgeführt werden, dass die Zustimmung des Issuers des Devices nicht zwingend benötigt wird. Das Verfahren soll sicher gegen Trojaner auf dem "Client" (d.h. Smartphone, Tablet oder PC) sein. Die Relying Party soll keinen Unterschied zum standardisierten FIDO Verfahren sehen, damit bestehende FIDO Server Infrastruktur weiter verwendet werden kann.

Ferner soll es möglich sein, eine FIDO-Authentifizierung mit Hilfe einer EMV-Karte durchzuführen. Gemäß bekannter Verfahren muss eine Signatur mit elliptischen Kurven berechnet werden, um die Authentisierung durchzuführen, wobei die EMV-Karten hierzu nicht in der Lage sind. Bei EMV-Karten handelt es sich um Kreditkarten bzw. Smartcards gemäß der EMV-Spezifikation für Zahlungskarten. Diese Karten verfügen über einen Prozessorchip und sind für die zugehörigen Chipkartengeräte, also Point Of Sale Terminals und Geldautomaten ausgelegt. EMV steht hierbei für die Entwickler Europay International, Mastercard und Visa.

Der Erfindung liegt die Aufgabe zugrunde, ein Verfahren vorzuschlagen, welches eine Authentisierung ermöglicht, wobei mittels standardisierter Schnittstellen möglichst ein geringer technischer Aufwand erforderlich ist. Darüber hinaus ist es eine Aufgabe der vorliegenden Erfindung, dass das vorzuschlagende Verfahren Möglichkeiten aufweist, komplexe Vorgänge zu berechnen, auch wenn diese nicht allein von einer Kreditkarte an sich zu berechnen sind. Darüber hinaus soll das Verfahren besonders fälschungssicher ablaufen und eine Eingabe einer falschen PIN soll nicht direkt ersichtlich machen, dass eine fehlgeschlagene Authentisierung tatsächlich allein an der falsch eingegebenen PIN liegt. Gleiches gilt für das Vorhalten einer nicht zu identifizierenden EMV-Karte oder für die versuchte Authentisierung gegenüber einer falschen Relying Party.

Diese Aufgabe wird mit einem Verfahren gemäß dem unabhängigen Anspruch 1 gelöst. Bevorzugte Ausgestaltungen des Verfahrens finden sich in den Unteransprüchen.

Demgemäß wird ein Verfahren zur Durchführung einer kryptographisch gesicherten Authentisierung zwischen einem Client und einer Relying Party vorgeschlagen, welche folgende Schritte aufweist. So erfolgt ein Anfragen der Authentisierung durch den Client bei der Relying Party, ein Übermitteln einer ersten Challenge-Nachricht, einer Dienstidentifikation eines Dienstes, bei dem der Client die Authentisierung anfrägt und einer eindeutigen Kennung eines Authentikatortyps jeweils von der Relying Party an den Client, ein Prüfen eines Vorhandenseins des übermittelten Authentikatortyps in einer Liste von durch den Client abgespeicherten Authentikatortypen, wobei bei einem Vorhandenseins des Authentikatortyps der Authentikator im vorliegenden Verfahren unterstützt wird und ansonsten eine Fehlerroutine gestartet wird. Ferner erfolgt ein Bereitstellen eines Passworts durch den Benutzer unter Verwendung des Clients, ein Anfordern einer zweiten Challenge-Nachricht bei einem Tokenserver durch den Client und anschließend das Übermitteln der angeforderten zweiten Challenge-Nachricht von dem Tokenserver an den Client, ein Übermitteln der zweiten Challenge-Nachricht von dem Client an den Authentikator, ein Übermitteln von Authentisierungsinformationseinheiten von dem Authentikator an den Client, ein Weiterleiten mindestens einer Auswahl der übermittelten Authentisierungsinformationseinheiten an den Tokenserver, ein Überprüfen der Korrektheit der Auswahl der weitergeleiteten Authentisierungsinformationseinheiten durch den Tokenserver unter Verwendung der auf dem Tokenserver zwischengespeicherten zweiten Challenge-Nachricht, ein Berechnen eines Benutzerschlüssels anhand von Daten, welche von dem Authentikator, dem Client und/oder der Relying Party an den Tokenserver übermittelt wurden, ein Berechnen einer Response-Nachricht unter Verwendung des berechneten Benutzerschlüssels, ein Übersenden der Response-Nachricht von dem Tokenserver an den Client und Weiterleiten mindestens der Response-Nachricht an die Relying Party und ein Überprüfen mindestens der Response-Nachricht durch die Relying Party unter Verwendung des Benutzerschlüssels und der von der Relying Party zwischengespeicherten ersten Challenge-Nachricht, und positives Authentisieren bei einem positiven Überprüfen und Ausführen der Fehlerroutine bei einem negativen Überprüfen.

Erfindungsgemäß authentifiziert sich ein Benutzer mittels eines Authentikators gegenüber einer Relying Party, also beispielsweise einem Server bzw. einem Serverdienst. Der Authentikator ist eine Einheit, die grundsätzlich der Lage ist, einen Schlüssel zu erzeugen und für einen Authentisierungsvorgang verwendbar zu machen. Der Authentikator kann grundsätzlich als Datenträger vorliegen, etwa in Form einer Smartcard, beispielsweise einer EMV-Karte. Der Datenträger kann auch die Gestalt einer integrierten SIM-Karte haben und als eSIM vorliegen (elektronisches SIM). Der Authentikator kann weiterhin auch körperlos in Gestalt einer Anwendung oder als Software-Element etwa in Form von Steuerbefehlen ausgeführt sein, die in einer sicheren Umgebung ausgeführt werden, beispielsweise in einem sogenannten eSE (embedded Secure Element), innerhalb einer TEE (Trusted Execution Environment) oder als HCE (Host Card Emulation) Device.

Liegt der Authentikator als Karte vor, wird diese an ein Lesegerät, also an einen Client, herangeführt. Dies kann drahtlos oder kontaktgebunden passieren. Der Client ist mit der Relying Party netzwerktechnisch verbunden. Ebenso ist der Client auch mit dem Tokenserver netzwerktechnisch verbunden.

Zweckmäßig kann der Client ein Smartphone sein und der Authentikator ein darin ausgebildetes embedded Secure Element. In diesem Fall ist der Authentikator einstückig mit dem mobilen Endgerät, dem Smartphone, ausgebildet. Typischerweise erfolgt dies, indem eine hardwaretechnisch und/oder softwaretechnisch besonders gegen Manipulationen gesicherte technische Komponente in ein Smartphone integriert wird.

Bei einem solchen embedded Secure Element handelt es sich um ein Sicherheitselement, welches einen gesicherten Speicher aufweist, der physikalische und logische Sicherheitsmechanismen vorhält und eine Datenintegrität gewährleistet. Ferner kann in einem solchen Sicherheitselement eine gesicherte Laufzeitumgebung vorgehalten werden, sodass gerade in einem solchen Sicherheitselement Daten sowohl sicher aufbewahrt als auch sicher verarbeitet werden können.

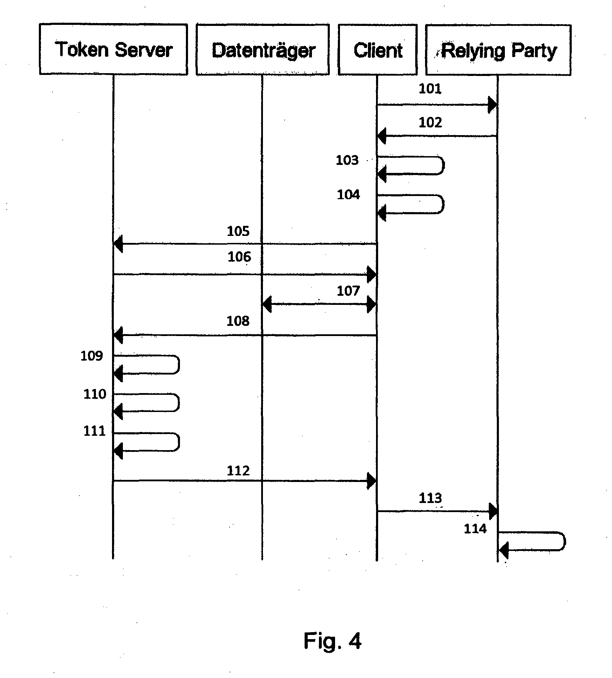

Das vorgeschlagene Verfahren sieht vor, dass der Authentikator bzw. der Datenträger unter Verwendung des Clients authentisiert wird. Somit initiiert der Authentikator unter Verwendung des Clients die Authentisierung, wobei auch vorbereitende Verfahrensschritte vorgeschaltet werden können. Bei einem solchen vorbereitenden Verfahrensschritt kann es sich beispielsweise um ein Registrieren eines Benutzers bzw. dessen Authentikators handeln. Hierbei kann der Benutzer selbst ein Passwort wählen, das in späteren Verfahrensschritten wiederverwendet wird. Lediglich beispielhaft wird bereits an dieser Stelle auf Figur 4 verwiesen, welche in dem Verfahrensschritt 104 vorsieht, dass der Benutzer ein Passwort eingibt, welches er bei der Registrierung vergeben hat.

Unter anderem stellt sich erfindungsgemäß der Vorteil ein, dass besonders rechenintensive Aufgaben nicht direkt von dem Datenträger bzw. dem Authentikator durchgeführt werden. Vielmehr werden diese rechenintensiven Aufgaben ausgelagert und an den Tokenserver vermittelt. Somit müssen also solche sicherheitskritischen Rechenoperationen nicht mehr in der Smartcard bzw. dem Sicherheitselement ausgeführt werden und entsprechende Hardwarerestriktionen kommen hier nicht zur Geltung.

Dies ist beispielsweise für Smartcards vorteilhaft, weil Smartcards typischerweise lediglich über eine Induktionsspule verfügen und somit nur temporär eine Energieversorgung bereitstellen können. Eine Smartcard wird gemäß bekannten Anwendungsszenarien an ein Lesegerät vorgehalten, wobei mittels der Induktionsspule im Zusammenwirken mit dem Lesegerät ein geringer Strom induziert wird, der den Prozessor bzw. weitere elektronische Komponenten versorgt. Insbesondere verfügen solche Smartcards bauartbedingt lediglich über limitierte Hardwareressourcen. Folglich tritt erfindungsmäßig der vorteilhafte technische Effekt ein, dass bekannte Smartcards oder Sicherheitselemente wiederverwendet werden können, auch wenn einzelne Verfahrensschritte komplexe Rechenoperationen vorsehen. Somit ist es also lediglich einer der erfindungsgemäßen Vorteile, dass rechenintensive Operationen an einen spezialisierten Tokenserver ausgelagert werden können.

Vorliegend handelt es sich generell um ein Verfahren zur Durchführung einer Authentisierung eines Clients gegenüber der Relying Party, wobei die Relying Party wiederum den Client bzw. den Benutzer oder dessen Datenträger authentifiziert. Insgesamt wird vorliegend jedoch teilweise Authentisierung und Authentifizierung synonym verwendet. Bei der Auslegung weiterer Fachtermini sowie der übersendeten Nachrichten sollen bevorzugt die eingangs angeführten FIDO-Spezifikationen zugrunde liegen. Hierbei hat das Fachgebiet eine eigene Terminologie und typischerweise englische Bezeichnungen entwickelt, die teilweise so vorliegend wiederverwendet werden. Dies ermöglicht es auch, das vorgeschlagene Verfahren in einem bestehenden FIDO-Framework einzubetten.

Die aufgezeigten Verfahrensschritte mögen teilweise einzeln bekannt sein, wobei jedoch vorliegend auf die geschickte Abfolge in ihrer Gesamtheit abgestellt wird, welche lediglich so zu dem erfindungsgemäßen Ergebnis führt. Insbesondere erkennt hierbei der Fachmann, dass einzelne Schritte teilweise iterativ ausgeführt werden können und teilweise weitere Verfahrensschritte bzw. Nachrichtenübermittlungen notwendig sind.

Im Folgenden werden Aspekte mit Bezug auf das Rahmenwerk Universal 2nd Faktor U2F vorgestellt.

Die Erfindung basiert auch auf dem Grundgedanken, einen Datenträger, insbesondere eine EMV-Karte, als zweiten Formfaktor (U2F) einzusetzen, wobei der Datenträger über einen Client, bspw. ein Mobiltelefon, mit einem Tokenserver in Verbindung steht. Der Tokenserver kann - ohne das Erfordernis eine Nutzerdatenbank vorhalten zu müssen - alsdann weitere Dienste, wie beispielsweise eine ressourcenintensive Schlüsselableitung, übernehmen.

Demgemäß betrifft die Erfindung auch ein Verfahren zum Durchführen einer Zweifaktorauthentifizierung zwischen einem Client und einer Relying Party, umfassend die folgenden Schritte: Durchführen einer Authentisierung zwischen dem Client und der Relying Party, Übermitteln von Authentisierungszusatzdaten von der Relying Party an den Client; Anfordern einer Server-Challenge (EMV-Challenge) durch den Client von einem Tokenserver; Übermitteln der Server-Challenge von dem Tokenserver an den Client; Durchführen eines Datenaustauschs zwischen dem Client und einem Datenträger, wobei der Client von dem Datenträger Datenträgerauthentisierungsdaten erhält, wobei die Datenträgerauthentisierungsdaten zumindest teilweise unter Verwendung von Daten aus der Server-Challenge berechnet werden, Übermitteln von Authentisierungsdaten von dem Client an den Tokenserver, wobei die Authentisierungsdaten Daten aus dem Datenaustausch zwischen Client und Datenträger, insbesondere die Datenträgerauthentisierungsdaten, sowie die Authentisierungszusatzdaten umfassen; Überprüfen der Authentisierungsdaten durch den Tokenserver; Erzeugen einer Authentisierungsantwort in dem Tokenserver; Übermitteln der Authentisierungsantwort von dem Tokenserver an den Client; und Übermitteln der Authentisierungsantwort von dem Client an die Relying Party und Überprüfen der Authentisierungsantwort durch die Relying Party.

Mit dem erfindungsgemäßen Verfahren ist es besonders vorteilhaft möglich, eine Zweifaktorauthentifizierung unter Verwendung des Datenträgers des Benutzers durchzuführen, wobei der Datenträger nicht speziell an die Verwendung in dem Zweifaktorauthentifizierungsverfahren angepasst werden muss. Ferner ist es nicht notwendig eine PIN-Verifikation gegenüber dem Datenträger, insbesondere dem EMV-Datenträger durchzuführen. Weiterhin kann in dem Verfahren mit Vorteil ein einfacher Tokenserver eingesetzt werden, der ohne eine Nutzerdatenbank, in der Daten zu jedem Nutzer gespeichert sind, auskommt. Folglich können Kosten sowohl bei der Auswahl des Datenträgers als auch bei der Auswahl des Tokenservers eingespart werden. Insbesondere der Aspekt der einfachen Auswahl des in dem Verfahren einzusetzenden Datenträgers senkt die Einstiegshürde für den Nutzer, da dieser zum Beispiel einfach einen seiner bereits vorhandenen Datenträger in dem Verfahren ein-. setzen kann. Entgegen der üblichen Bezeichnung kann die Relying Party auch als Bestätigungsinstanz gegenüber einer Diensteinrichtung, wie beispielsweise einem Web-shop, einem Emaildienst, etc., eingesetzt werden. Die Relying Party wirkt dann als Authentisierungsservice, auch bezeichnet als Authentication-as-a-service (AaaS), wobei der Authentisierungsservice die (Zweifaktor-)Authentisierung für die Diensteinrichtung übernimmt.

Gemäß der Erfindung handelt es sich bei dem Client um eine Einrichtung wie ein Mobiltelefon, ein Tablet-PC, einen PC oder dergleichen. Bei der Relying Party handelt es sich um eine Einrichtung wie einen Host, einen Server oder dgl., die Zugang zu einem Service, insbesondere einer sicheren Softwareapplikation ermöglicht. Ein Beispiel einer Relying Party ist ein Webdienst, zu dem ein Benutzer Zugang erlangen möchte, insbesondere ein Web-Shop, ein Bankingzugang, eine Emailapplikation oder dgl. Bei der Authentisierung zwischen dem Client und der Relying Party werden beispielsweise ein Nutzername und ein Kennwort abgefragt.

Bei den Datenträgerauthentisierungsdaten handelt es sich beispielsweise um Zertifikate, die der Client von dem Datenträger erhält, bspw. ein Issuer-Zertifikat (Aussteller) und/oder ein datenträgerspezifisches Zertifikat, sowie um Daten die durch einen Datenaustausch zwischen Client und Datenträger unter Ausnutzung von Daten aus der Server-Challenge ermittelt werden. Somit kann sichergestellt werden, dass die Datenträgerauthentisierungsdaten auch die Inhalte der Server-Challenge berücksichtigen. Die Datenträgerauthentisierungsdaten können zusätzliche Daten umfassen.

Die Authentisierungsdaten, die von dem Client an den Tokenserver übermittelt werden, umfassen mit Vorteil sowohl Daten aus dem Datenaustausch zwischen dem Client und dem Datenträger, also auch die Datenträgerauthentisierungsdaten, sowie Authentisierungszusatzdaten aus der Authentisierung zwischen dem Client und der Relying Party. Dadurch wird sichergestellt, dass der Datenträger beim Empfang der Server-Challenge tatsächlich bei dem Datenaustausch zwischen dem Client und dem Datenträger anwesend war. Ein mehrmaliges Einbringen der Datenträgerauthentisierungsdaten in die Authentisierungsdaten fällt unmittelbar auf, da die Datenträgerauthentisierungsdaten stets in Abhängigkeit von der Server-Challenge berechnet werden, wobei die Server-Challenge bei jedem Aufruf geändert wird. Somit ist es mit Vorteil möglich Replay-Angriffe zu verhindern, da der Tokenserver sich die zufällig erzeugte Server-Challenge merkt und diese für die Überprüfung der Datenträgerdaten verwendet.

Gemäß einer Ausführungsform werden beim Durchführen der Authentisierung zwischen dem Client und der Relying Party ein KeyHandle, insbesondere ein vor unbefugtem Zugriff geschützter UserPrivateKey, insbesondere ein verschlüsselter UserPrivateKey, eine Challenge, insbesondere eine FIDO-Challenge, und/oder eine AppID, insbesondere eine FIDO-AppID, übergeben. Auf Basis dieser Daten ist es mit Vorteil möglich, die Authentisierungsantwort zu berechnen. Dadurch wird sichergestellt, dass die Authentisierungsantwort für jede Zweifaktorauthentifizierung individuell berechnet wird.

Ferner kann die Erfindung das Prüfen der AppID sowie die Prüfung umfassen, mit welcher Einrichtung ein zweiter Faktor bei der Authentisierung nachzuweisen ist. Somit wird dem Client mit Vorteil mitgeteilt, dass beispielsweise ein Datenträger als zweiter Faktor (U2F) verwendet werden kann. Auf diese Weise wird das Verfahren für den Nutzer vereinfacht.

Gemäß einer besonders bevorzugten Ausführungsform ist zur Durchführung des Verfahrens, insbesondere zur Durchführung des Datenaustauschs, keine PIN-Eingabe gegenüber dem Datenträger erforderlich. Stattdessen kann sich der Datenträger (U2F) gegenüber dem Tokenserver authentisieren und der Tokenserver kann sich gegenüber der Relying Party bevorzugt mittels kryptografischer Methoden authentisieren. Die PIN-Verifikation des Datenträgers gegenüber dem Tokenserver ist nicht erforderlich, kann jedoch optional vorgesehen werden. Wird ein Ausweisdokument, insbesondere der deutsche Personalausweis (nPA) als der Datenträger verwendet, so ist stets eine PIN-Verifikation gegenüber dem Datenträger und auch gegenüber der RelyingParty notwendig, also eine doppelte PIN-Verifikation, die gegebenenfalls als störend empfunden werden kann. Bei EMV-Karten ist die PIN-Verifikation nicht zwingend erforderlich.

Gemäß einer weiteren besonders bevorzugten Ausführungsform der Erfindung weist die Server-Challenge unter anderem eine Zufallszahl auf. Die Zufallszahl kann beispielsweise als eine 4 Byte lange Zahl ausgebildet sein. Durch Senden der Zufallszahl an den Client ist es später möglich die Zufallszahl in die Datenträgerauthentisierungsdaten mit einzurechnen, beispielsweise in der Form einer Signatur. Dadurch kann der Tokenserver mit Vorteil nachprüfen, ob dem Client tatsächlich der Datenträger "vorgezeigt" wurde.

Weiterhin kann gemäß einer bevorzugten Ausführungsform zum Durchführen des Datenaustauschs zwischen dem Client und dem Datenträger eine kontaktlose und/oder eine kontaktbehaftete Verbindung zwischen dem Client und dem Datenträger hergestellt werden. Folglich ist es möglich den Datenträger über eine Luftschnittstelle mit dem Client zu verbinden. Dazu kann bevorzugt eine NFC-Verbindung zwischen Datenträger und Client hergestellt werden, indem der Datenträger beispielsweise an eine NFC-Schnittstelle des Clients (Mobiltelefons/Tablet-PCs) gehalten wird. Alternativ kann der Datenträger kontaktbehaftet in einen Kartenleser des Clients (PC) eingeführt werden.

Gemäß einem weiteren Aspekt der Erfindung kann die Überprüfung der Authentisierungsdaten durch den Tokenserver den Nachweis erbringen, dass der Datenträger bei dem Datenaustausch zwischen dem Client und dem Datenträger physisch vorhanden war. Die Authentisierungsdaten werden unter Berücksichtigung der Datenträgerauthentisierungsdaten berechnet. In die Datenträgerauthentisierungsdaten gehen die Daten aus der Server-Challenge mit ein. Folglich kann die Überprüfung der Authentisierungsdaten mit Vorteil den Nachweis erbringen, dass der Datenträger, also der zweite Faktor (U2F), während dem Datenaustausch zwischen dem Client und dem Datenträger physisch vorhanden war. Dadurch ist ein wesentliches Erfordernis bei der Zweifaktorauthentifizierung erfüllt.

Gemäß einer weiteren Ausführungsform kann bei der Überprüfung der Authentisierungsdaten durch den Tokenserver, der Tokenserver bei erfolgreicher Überprüfung aus den Authentisierungsdaten einen Clientschlüssel entschlüsseln, wobei der Clientschlüssel bei der Erzeugung der Authentisierungsantwort verwendet wird. In den Clientschlüssel gehen mit Vorteil ein Tokenservermasterschlüssel, der sicher in dem Tokenserver gespeichert ist, sowie Daten, die ausschließlich von dem Datenträger, der Relying Party und dem Client stammen, ein. Bei dem Clientschlüssel handelt es sich mit Vorteil um einen sog. ENC/MAC Wrapping Key und/oder den KeyHandle, in den der verschlüsselte FIDO PrivKey eingeht. Somit kann der Tokenserver mit Vorteil kostengünstig bereitgestellt werden, da in dem Tokenserver keine Nutzerdaten gespeichert werden müssen. Lediglich der Tokenservermasterschlüssel muss sicher in dem Tokenserver verwahrt werden, bevorzugt in einem HSM (Hardware Security Module).

Gemäß der Erfindung ist ein Client vorgesehen, der zur Verwendung in einem Verfahren gemäß den obigen Ausführungen geeignet ist, wobei es sich bei dem Client um ein mobiles Endgerät, einen Tablet-PC und/oder einen PC handelt. Gemäß diesen Ausgestaltungen ist es besonders vorteilhaft möglich, ein erfindungsgemäßes Verfahren auszuführen.

Weiterhin kann das erfindungsgemäße Verfahren besonders vorteilhaft mit einem System ausgeführt werden, das zur Verwendung in einem Verfahren gemäß den obigen Ausführungen eingerichtet ist.

Gemäß einer weiteren Ausführungsform erfolgt die Authentisierung des Nutzers nicht direkt zwischen dem Tokenserver und der Relying Party sondern über einen dazwischen geschalteten Authentisierungsdienst ("Identity Federation Service"). In diesem Fall fordert die Relying Party über ein industrieübliches Federation-Protokoll (z.B. OpenID Connect oder SAML) die Nutzerauthentisierung bei dem Authentisierungsdienst an. Der Authentisierungsdienst wird dann vom Nutzer mit Hilfe des Clients, des Tokenservers und des Datenträgers eine Authentisierung anfordern. Der Authentisierungsvorgang läuft wie oben beschrieben ab, jedoch gegenüber dem Authentisierungsdienst und nicht gegenüber der Relying Party. Nach erfolgreicher Authentisierung attestiert der Authentisierungsdient gegenüber der Relying Party die Authentisierung, ggf. ergänzt um weitere Identitätsdaten oder nutzerspezifische Attestierungen, die der Authentisierungsdienst aufgrund seiner gespeicherten Nutzerdaten durchführen kann.

Zusammenfassend ist es mit dem erfindungsgemäßen Verfahren möglich, einen Authentikator mit der Gestalt einer Vielzahl verschiedener Datenträger als zweiten Faktor zu verwenden, insbesondere können EMV-Karten als zweiter Faktor für FIDO-U2F verwendet werden.

Die Datenträger müssen nicht über die für FIDO erforderlichen kryptographischen Fähigkeiten verfügen. Daher entfällt für viele Personen die Notwendigkeit, ein gesondertes "2. Device" zu beschaffen und vorzuhalten. Weiterhin ist die Zustimmung der Herausgeber der Datenträger (Card Issuer) zur Ausführung des Verfahrens nicht notwendig. Somit kann das Verfahren ohne wesentlichen Aufwand implementiert werden.

Der erforderliche Tokenserver benötigt keine Datenbank, in der Nutzerdaten/Clientdaten gespeichert werden. Folglich ist der Tokenserver einfach und kostengünstig. Lediglich ein HSM zur Aufbewahrung des Tokenservermasterschlüssels ist vorteilhaft.

Das erfindungsgemäße Verfahren ist durch Verwendung der Server-Challenge bei der Berechnung der Datenträgerauthentisierungsdaten sicher gegen Trojaner auf dem Client.

Ein weiterer Vorteil des Verfahrens ist, dass der Datenträger nur kurz während der Durchführung des Datenaustausch zwischen dem Client und dem Datenträger in die Nähe des Client gehalten werden muss. Dadurch wird die Wahrscheinlichkeit von unabsichtlich unterbrochenen Authentisierungen gering gehalten.

### Kurze Beschreibung der Zeichnungen

- Fig. 1: zeigt schematisch den Ablauf einer erfindungsgemäßen Zweifaktorauthentifizierung;
- Fig. 2: zeigt den Ablauf einer erfindungsgemäßen Zweifaktorauthentifizierung in einer detaillierteren Darstellung;
- Fig. 3: zeigt ein Flussdiagramm, das eine erfindungsgemäße Zweifaktorauthentifizierung darstellt;
- Fig. 4: zeigt ein Sequenzdiagramm zur Verdeutlichung des erfindungsgemäßen Verfahrens zur Durchführung einer kryptographisch gesicherten Authentisierung gemäß dem Universal Authentication Framework;
- Fig. 5: zeigt einen Registrierungsprozess im Rahmen des vorgeschlagenen Verfahrens zur Durchführung einer kryptographischen Authentisierung;
- Fig. 6: zeigt einen Ablauf einer Authentisierung gemäß des vorgeschlagenen Verfahrens;
- Fig. 7: zeigt ein weiteres Sequenzdiagramm mit weiteren beteiligten technischen Komponenten gemäß des beanspruchten Verfahrens; und
- Fig. 8: zeigt ebenfalls ein Sequenzdiagramm gemäß des vorgeschlagenen Verfahrens.

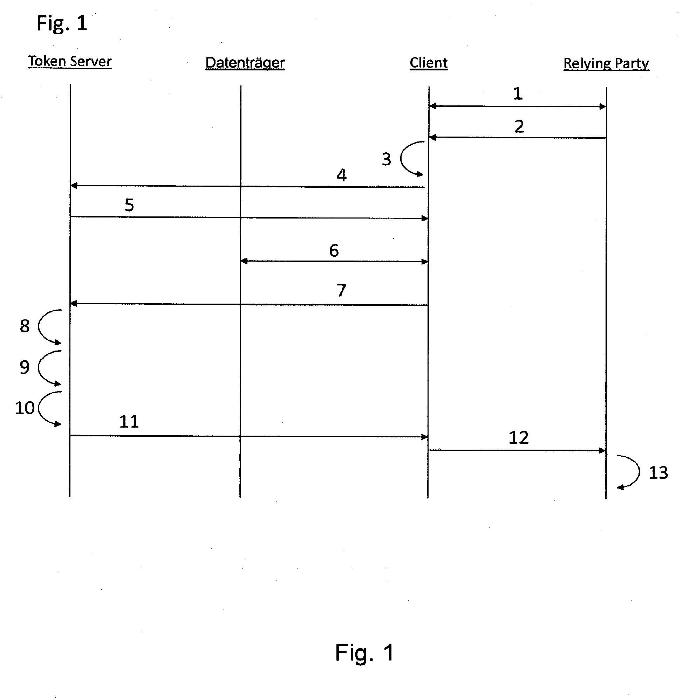

Im Folgenden werden zunächst beispielhafte Ausführungsformen der Erfindung im Detail unter Bezugnahme auf die Fig. 1 bis3 beschrieben. Veränderungen in Bezug auf das beschriebene Verfahren sind innerhalb des durch die Ansprüche festgelegten Schutzumfangs möglich.

Fig. 1 zeigt schematisch den Ablauf einer erfindungsgemäßen Zweifaktorauthentifizierung zwischen einem Client und einer Relying Party gemäß einem Aspekt der vorliegenden Erfindung. Bei einem Client handelt es sich beispielsweise um ein Mobiltelefon, einen Tablet-PC, einen Computer (PC) oder dergleichen. Bei einer Relying Party handelt es sich beispielsweise um eine Einrichtung, wie einen Host, einen Server oder dgl., die Zugang zu einem Service, insbesondere einer sicheren Softwareapplikation ermöglicht.

Bei der Zweifaktorauthentifizierung kommt bevorzugt der Industriestandard U2F (Universal Second Factor, universeller zweiter Faktor) zum Einsatz. Die U2F-Spezifikation wird von der FIDO-Allianz verwaltet.

Bei der erfindungsgemäßen Zweifaktorauthentifizierung wird zunächst (Schritt 1) eine Authentisierung zwischen dem Client und der Relying Party durchgeführt. Diese kann beispielsweise durch die Eingabe von Nutzername und Kennwort in einem Web-Browser durchgeführt werden.

Im nächsten Schritt 2 werden Authentisierungszusatzdaten von der Relying Party an den Client übermittelt. Bei den Authentisierungszusatzdaten kann es sich beispielsweise um einen (FIDO-)KeyHandle, eine FIDO-Challenge und eine (FIDO-)AppID handeln. Diese Begriffe sind aus dem FIDO-Standard ausreichend bekannt, weshalb abgesehen von der im Folgenden kurzen Beschreibung der Begriffe auf eine Beschreibung verzichtet wird.

Der KeyHandle identifiziert und weist den privaten Schlüssel (UserPrivateKey) für die nachfolgende Authentisierung des Benutzers gegenüber der Relying Party in verschlüsselter Form auf. Bei der Challenge handelt es sich um eine normale Challenge für eine kryptographische Operation, bspw. eine Zufallszahl. Die AppID identifiziert den (Web-)Dienst, bei dem sich der Benutzer authentisieren möchte.

In einem darauffolgenden, fakultativen Schritt 3 kann die AppID überprüft werden. Weiterhin kann in dem Schritt 3 geprüft werden, auf welche Art der zweite Faktor (U2F) nachgewiesen werden kann. Im vorliegenden Fall wird angenommen, dass der Authentikator die Gestalt eines Datenträgers besitzt und entsprechend ein Datenträger als zweiter Faktor zulässig ist.

In einem Folgeschritt 4 fordert der Client von einem Tokenserver eine Server-Challenge an. Diese Server-Challenge kann, wenn es sich bei dem zu verwendenden Datenträger um eine EMV-Karte handelt, auch als EMV-Challenge bezeichnet werden. Die Server-Challenge umfasst eine Zufallszahl (Unpredictable Number), die der Tokenserver bereitstellt. Die Zufallszahl ist bspw. zumindest 4 Byte lang. Die Server-Challenge wird in einem späteren Schritt 6 (s.u.) von dem Datenträger geprüft, insbesondere signiert. Durch die Signatur kann der Tokenserver überprüfen, ob dem Client tatsächlich der Datenträger präsentiert wurde. Da in der Server-Challenge die Zufallszahl enthalten ist, wird die Möglichkeit eines Replay-Angriffs durch einen Angreifer erschwert. In Schritt 4 können Authentisierungszusatzdaten von dem Client an den Tokenserver im Rahmen der Anforderung der Server-Challenge übermittelt werden. Alternativ können diese Authentisierungszusatzdaten im Schritt 7 übermittelt werden (siehe unten). Es ist unerheblich, ob die Authentisierungszusatzdaten im Schritt 4 und/oder 7 an den Tokenserver übermittelt werden.

Anschließend wird die Server-Challenge von dem Tokenserver an den Client in einem weiteren Schritt 5 übermittelt.

Daraufhin wird ein Datenaustausch zwischen dem Client und dem Datenträger durchgeführt (Schritt 6). Im Zuge des Datenaustauschs wird der Datenträger in Verbindung mit dem Client gebracht, bspw. kontaktlos oder kontaktbehaftet. Es werden Daten zwischen dem Datenträger und dem Client ausgetauscht. Beispielsweise kann der Client zumindest ein Zertifikat von dem Datenträger erhalten, insbesondere ein IssuerPKCert und ein CardPKCert.

Weiterhin sendet der Client im Schritt 6 die Server-Challenge an den Datenträger, wobei der Datenträger Datenträgerauthentisierungsdaten berechnet und die Server-Challenge in die Berechnung der Datenträgerauthentisierungsdaten mit eingeht. Da die Server-Challenge in die Berechnung der Datenträgerauthentisierungsdaten mit eingeht, geht auch die Zufallszahl aus der Server-Challenge mit in die Berechnung ein. Gemäß der Erfindung nimmt der Client die Datenträgerauthentisierungsdaten von dem Datenträger nur entgegen ohne sie zu prüfen, da gemäß der Erfindung die Prüfung im Tokenserver (Schritte 8 bis10) zu einem späteren Zeitpunkt erfolgt. Zum späteren Zeitpunkt der Prüfung im Tokenserver ist es nicht mehr notwendig den Datenträger mit dem Client zu verbinden.

In einem nachfolgenden Schritt 7 werden Authentisierungsdaten von dem Client an den Tokenserver übermittelt, wobei die Authentisierungsdaten Daten aus dem Datenaustausch zwischen Client und Datenträger, insbesondere die Datenträgerauthentisierungsdaten, sowie die Authentisierungszusatzdaten umfassen. Daten, die aus dem Austausch mit dem Datenträger stammen, können bspw. das IssuerPKCert, das CardPKCert, und die Datenträgerauthentisierungsdaten umfassen. Daten die aus dem Austausch mit der Relying Party stammen, können den KeyHandle, einen Hash der AppID, sowie einen Hash der Clientdaten umfassen, wobei die Clientdaten die ursprüngliche (FIDO-) Challenge aufweisen.

Die an den Tokenserver übermittelten Authentisierungsdaten werden in einem nächsten Schritt 8 durch den Tokenserver überprüft. Der Tokenserver kann bei der Prüfung das IssuerPKCert mit Hilfe eines vorliegenden "Payment Scheme Public Key", das CardPKCert mit Hilfe des nun geprüften "Issuer Public Key" und die Datenträgerauthentisierungsdaten mit Hilfe des nun geprüften "Card Public Key" prüfen.

Sind alle Prüfungen erfolgreich, ist sichergestellt, dass die Datenträgerauthentisierungsdaten von einem echten Datenträger, bspw. einer EMV-Karte, stammen bzw. signiert wurden, d.h. der entsprechende Datenträger wurde tatsächlich vorgewiesen. Der Tokenserver kann sich bei Verwendung einer EMV-Karte bspw. davon überzeugen, dass die Daten Primary Account Number, PAN Sequence Number (fakultativ) und Expiry Date, welche eine EMV-Karte eindeutig identifizieren, von der verwendeten EMV-Karte stammen. Der Tokenserver führt in diesem Zusammenhang Schritte aus, die bei einer bekannten EMV-Transaktion das Terminal durchführen würde.

Im Fall einer erfolgreichen Überprüfung, entschlüsselt der Tokenserver in einem nächsten, fakultativen Schritt 9 aus den Authentisierungsdaten einen Clientschlüssel. Dazu kann der Tokenserver bspw. den User Private Key (auch bezeichnet als Clientschlüssel) entschlüsseln, der (zusammen mit ggf. anderen Daten) im vorliegenden Key Handle (s.o.) enthalten ist. Der zur Entschlüsselung von KeyHandle bevorzugt erforderliche (symmetrische) Schlüssel "KWrap" kann aus folgenden Daten abgeleitet werden: Master Key (Hauptschlüssel) des Tokenserver, Personal Account Number (PAN), (optional) PAN-Sequence Number, (optional) ExpiryDate, (optional) weitere Daten. Gemäß einer Alternative kann der Schlüssel "KWrap" beispielsweise das Ergebnis der Verschlüsselung oder Entschlüsselung eines Hashwerts über die Kartendaten (PAN, PAN Sequence Number, Expiry Date, etc.) sein.

Sämtliche benutzerbezogenen Daten, die zur Schlüsselableitung verwendet werden, stammen von dem Client, dem Datenträger, bzw. der Relying Party. Eine Benutzerdatenbank muss in dem Tokenserver nicht vorgehalten werden. Dadurch ist es möglich den Tokenserver einfach zu konfigurieren und im Ergebnis kostengünstiger zu konfigurieren. Lediglich der gemäß einer bevorzugten Ausführungsform zu verwendende Master Key des Tokenserver muss, um die Sicherheit des Verfahrens zu gewährleisten, sicher verwahrt werden. Dafür bietet sich ein HSM (Hardware Security Module) an.

Im Anschluss wird in einem nächsten Schritt 10 eine Authentisierungsantwort in dem Tokenserver erzeugt. Die Authentisierungsantwort dient zur Bestätigung der Echtheit des zweiten Faktors (U2F), im vorliegenden Fall des Datenträgers. In dem vorliegenden Ausführungsbeispiel kann mit Hilfe des User Private Key die (FIDO-) Authentication Response Message erzeugt werden, wobei es sich um eine Signatur mit Hilfe des User Private Key über einen Hash(AppID), einen Hash(Client data), wobei mit diesem Hash indirekt auch die ursprüngliche FIDO-Challenge der Relying Party signiert wird, einen Counter (Application Transaction Counter der EMV-Karte), etc. handelt.

Danach wird die Authentisierungsantwort ggf. in Verbindung mit weiteren Daten in einem Folgeschritt 11 an den Client gesendet und von dort in einem weiteren Schritt 12 an die Relying Party gesendet. Alternativ kann die Authentisierungsantwort auch direkt an die Relying Party gesendet werden.

Die Relying Party prüft alsdann (Schritt 13) die Authentisierungsantwort; im vorgenannten Ausführungsbeispiel prüft die Relying Party die (Signatur der) (FIDO-) Authentication-Response. Dazu verwendet die Relying Party den User Public Key (Clientschlüssel). Diese Überprüfung kann gemäß dem FIDO-Standard erfolgen und wird daher nicht näher erläutert.

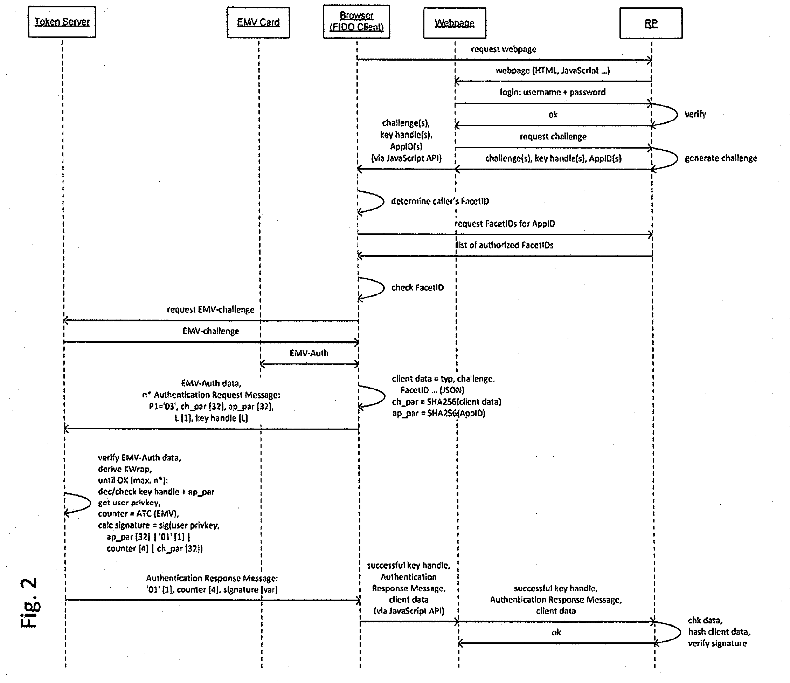

Fig. 2 zeigt den Ablauf einer erfindungsgemäßen Authentifizierung bei Verwendung einer EMV-Karte als Authentikator gemäß einem Aspekt der vorliegenden Erfindung. Bei einer EMV-Karte handelt es sich in der Regel um eine Zahlungskarte, die gemäß der EMV- Spezifikation (Europay International, MasterCard und VISA) ausgebildet ist. EMV-Karten sind derzeit so spezifiziert, dass sie keine elliptischen Kurven, die bei asymmetrischen Kryptosystemen zur Anwendung kommen und die bei einer FIDO-U2F-Authentifizierung gefordert werden, berechnen können.

Entsprechend eignet sich das erfindungsgemäße Verfahren unter anderem bei Verwendung einer EMV-Karte (Datenträger) als zweiten Faktor (U2F), da die EMV-Karte im Zusammenwirken mit einem Tokenserver die gemäß FIDO geforderte Berechnung auslagern kann.

Somit zeigt Fig. 1 ein Verfahren zum Durchführen einer Zweifaktorauthentifizierung zwischen einem Client und einer Relying Party, umfassend die folgenden Schritte:
- Durchführen 1 einer Authentisierung zwischen dem Client und der Relying Party;
- Übermitteln 2 von Authentisierungszusatzdaten von der Relying Party an den Client;
- Anfordern 4 einer Server-Challenge durch den Client von einem Tokenserver;
- Übermitteln 5 der Server-Challenge von dem Tokenserver an den Client;
- Durchführen 6 eines Datenaustauschs zwischen dem Client und einem Datenträger, wobei der Client von dem Datenträger Datenträgerauthentisierungsdaten erhält, wobei die Datenträgerauthentisierungsdaten zumindest teilweise unter Verwendung von Daten aus der Server-Challenge berechnet werden,
- Übermitteln 7 von Authentisierungsdaten von dem Client an den Tokenserver, wobei die Authentisierungsdaten Daten aus dem Datenaustausch zwischen Client und Datenträger, insbesondere die Datenträgerauthentisierungsdaten, sowie die Authentisierungszusatzdaten umfassen;
- Überprüfen 8 der Authentisierungsdaten durch den Tokenserver;
- Erzeugen 10 einer Authentisierungsantwort in dem Tokenserver;
- Übermitteln 11 der Authentisierungsantwort von dem Tokenserver an den Client; und
- Übermitteln 12 der Authentisierungsantwort von dem Client an die Relying Party und Überprüfen 13 der Authentisierungsantwort durch die Relying Party.

Gemäß einem weiteren Aspekt der Erfindung ist vorgesehen, dass beim Durchführen der Authentisierung zwischen dem Client und der Relying Party ein KeyHandle, insbesondere ein UserPrivateKey, eine Challenge und/oder eine AppID übergeben werden.

Gemäß einem weiteren Aspekt der vorliegenden Erfindung ist vorgesehen, dass zur Durchführung des Verfahrens keine PIN-Eingabe gegenüber dem Datenträger erforderlich ist.

Gemäß einem weiteren Aspekt der vorliegenden Erfindung ist vorgesehen, dass die Server-Challenge eine Zufallszahl aufweist.

Gemäß einem weiteren Aspekt der vorliegenden Erfindung ist vorgesehen, dass zum Durchführen des Datenaustauschs zwischen dem Client und dem Datenträger eine kontaktlose und/oder eine kontaktbehaftete Verbindung zwischen dem Client und dem Datenträger hergestellt wird.

Gemäß einem weiteren Aspekt der vorliegenden Erfindung ist vorgesehen, dass die Überprüfung der Authentisierungsdaten durch den Tokenserver den Nachweis erbringt, dass der Datenträger bei dem Datenaustausch zwischen dem Client und dem Datenträger physisch vorhanden war.

Gemäß einem weiteren Aspekt der vorliegenden Erfindung ist vorgesehen, dass bei der Überprüfung der Authentisierungsdaten durch den Tokenserver der Tokenserver aus den Authentisierungsdaten, insbesondere den Authentisierungszusatzdaten, einen Clientschlüssel entschlüsselt (10), wobei der Clientschlüssel bei der Erzeugung der Authentisierungsantwort verwendet wird.

Gemäß einem weiteren Aspekt der vorliegenden Erfindung ist vorgesehen, dass in dem Tokenserver keine Nutzerdaten gespeichert sind.

Gemäß einem weiteren Aspekt der vorliegenden Erfindung ist vorgesehen, dass der Tokenserver die Authentisierungsantwort mit Hilfe von Nutzerdaten erzeugt, welche ausschließlich von dem Client, dem Datenträger und/oder der Relying Party stammen.

Gemäß einem weiteren Aspekt der vorliegenden Erfindung ist vorgesehen, dass zum Datenaustausch zwischen dem Client und dem Datenträger keine PIN-Verifikation notwendig ist.

Ferner umfasst das Verfahren gemäß einem Aspekt der Erfindung den Schritt des Überprüfens, ob mit dem Datenträger als dem zweiten Faktor eine Zweifaktorauthentifizierung zulässig ist.

Gemäß einem weiteren Aspekt der vorliegenden Erfindung wird ein Client vorgeschlagen, der zur Verwendung in einem Verfahren nach einem der vorhergehenden Ansprüche geeignet ist, wobei es sich bei dem Client um ein mobiles Endgerät, einen Tablet-PC und/oder einen PC handelt.

Gemäß einem weiteren Aspekt der vorliegenden Erfindung wird ein System vorgeschlagen, das zur Verwendung in einem Verfahren nach einem der vorhergehenden Ansprüche eingerichtet ist.

Gemäß einem weiteren Aspekt der vorliegenden Erfindung wird ein Tokenserver vorgeschlagen, der zur Verwendung in einem Verfahren nach einem der vorhergehenden Ansprüche geeignet ist.

Fig. 2 zeigt in diesem Zusammenhang den beispielhaften Ablauf einer erfindungsgemäßen Zweifaktorauthentifizierung, bei der ein Benutzer versucht, sich in einem Browser (FIDO-Client) auf einer Webseite einer Relying Party einzuloggen. Die in Fig. 2 gezeigten Schritte entsprechen im Wesentlichen den in Fig. 1 erläuterten Schritten, weshalb auf eine nochmalige detaillierte Beschreibung verzichtet wird.

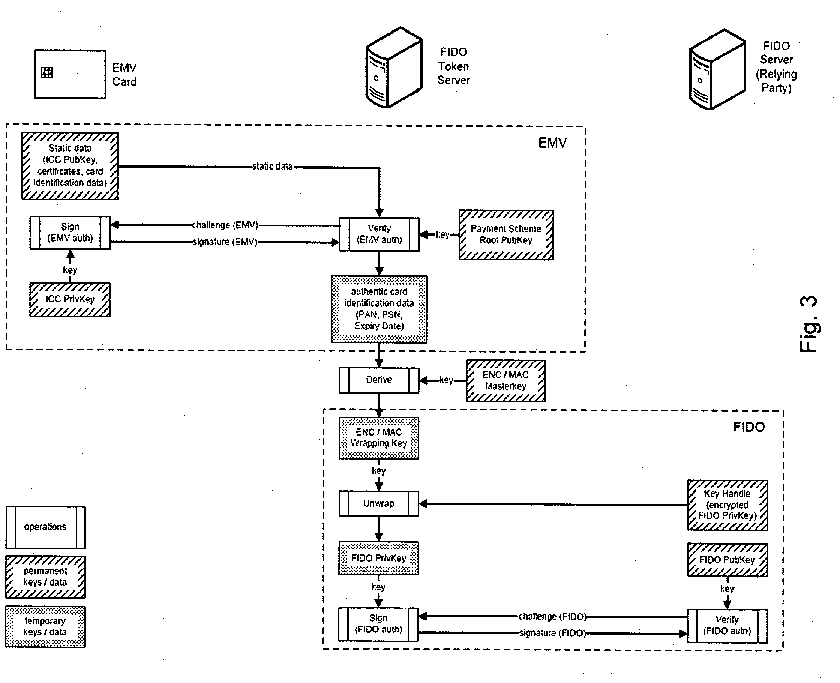

Fig. 3 zeigt ein Flussdiagramm, das die erfindungsgemäße Zweifaktorauthentifizierung darstellt, wobei in Analogie zu Fig. 2 ebenfalls eine EMV-Karte als Datenträger eingesetzt wird. Die Abläufe in Fig. 3 entsprechen im Wesentlichen den in Fig. 1 und 2 gezeigten Abläufen, weshalb auf eine erneute Beschreibung verzichtet wird.

Im Folgenden werden beispielhafte Ausführungsformen der Erfindung im Detail unter Bezugnahme auf die Figuren 4 bis 8 beschrieben. Diese stellen insbesondere auf das beanspruchte Verfahren zur Durchführung einer kryptographisch gesicherten Authentisierung ab bzw. auf die analog ausgestaltete Systemanordnung. Jeweils erkennt der Fachmann, dass das Verfahren Verfahrensschritte vorschlägt, welche strukturell von der Systemanordnung derart nachgebildet werden können, dass die gleiche Funktionalität bereitgestellt wird. Ferner können die vorgeschlagenen physischen Einheiten der Systemanordnung bezüglich ihrer Funktionalität als Verfahrensschritte nachgebildet werden. Somit ist das Verfahren geeignet, die beanspruchte Systemanordnung zu betreiben und die Systemanordnung ist geeignet, das beanspruchte Verfahren auszuführen.

Fig. 4 zeigt ein Sequenzdiagramm des beanspruchten Verfahrens einer kryptographisch gesicherten Authentisierung. Hierbei werden die oben beschriebenen Aufgaben gelöst, insbesondere, dass komplexe Rechenoperationen an einen Server ausgelagert werden und dass nicht unmittelbar feststellbar ist, ob eine falsche PIN eingegeben oder eine falsche EMV-Karte verwendet wurde oder eine Authentisierung gegenüber einer falschen Relying Party versucht wurde.

Die Aufgaben werden gelöst durch Verwendung von EMV-Karten als UAF Authentikator. Die im FIDO-Standard geforderte Interaktion ist das Vorweisen der EMV-Karte gegenüber dem "Local Device" und zusätzlich die Eingabe eines Passwortes. Im Falle eines NFC-fähigen Smartphones kann dies das Annähern der EMV-Karte an das Smartphone sein, bei einem PC das Einstecken der EMV-Karte in ein Kartenlesegerät.

Die Anbindung per NFC (Near Field Communication) oder kontaktbehaftet sind mögliche Schnittstellen, die Lösung ist aber unabhängig vom Formfaktor der EMV-Karte, d.h. sie kann alternativ auch vorliegen als eSE (embedded Secure Element), innerhalb einer TEE (Trusted Execution Environment), als HCE (Host Card Emulation) Device oder als" Wearable" (z.B. Smartwatch mit Bluetooth Anbindung). EMV-Karten sind jedoch nicht auf die Verwendung mit FIDO ausgelegt, sondern auf EMV-Transaktionen. Um dennoch als UAF Authentikator verwendet werden zu können, wird gemäß einem Aspekt der vorliegenden Erfindung ein sogenannter "Tokenserver" zum System hinzugefügt. Dieser Tokenserver übernimmt gemäß einem Aspekt der vorliegenden Erfindung die Ableitung des FIDO Schlüssels und die Generierung der FIDO Signatur gemäß dem FIDO Protokoll. Das System ist so aufgebaut, dass der Tokenserver keine irgendwie geartete Nutzerdatenbank enthält; somit ist der Tokenserver kostengünstig realisierbar. Außerdem ist es nicht möglich, bei einem Angriff auf den Tokenserver irgendwelche gespeicherten Nutzerdaten zu erbeuten.

Die seitens FIDO UAF geforderte Absicherung des Authentikators vor unberechtigter Verwendung wird dadurch gewährleistet, dass seitens des Tokenservers ein vom Benutzer eingegebenes Passwort in die Schlüsselableitung mit eingeht.

Schritt 101: Da sich das erfindungsgemäße Verfahren vorzugsweise auf eine primäre Authentisierung gemäß FIDO UAF mittels eines kryptographischen Schlüssels bezieht, ist der Relying Party zu Beginn der Authentisierung nicht bekannt, welcher registrierte Benutzer sich authentisieren will. Daher ist es im Gegensatz zu FIDO U2F, wo der Benutzer durch eine vorhergegangene primäre Authentisierung (mittels username/passwort) identifiziert ist, der Relying Party nicht möglich, dem Benutzer Daten bereitzustellen, die nutzerspezifisch sind und z.B. zur Entschlüsselung eines nutzerspezifischen Schlüssels dienen können, wie dies bei FIDO U2F möglich ist.

Schritt 102: Der Client erhält von der Relying Party
- eine FIDO-Challenge
- eine (FIDO-)AppID, sowie
- mindestens ein Kriterium für die Auswahl der erlaubten Authentikatoren, zweckmäßig die AAIDs der erlaubten Authentikatortypen.

Erläuterungen: Die FIDO-Challenge ist eine normale Challenge für eine kryptographische Operation, also beispielsweise eine Zufallszahl. Die AppID identifiziert den (Web-)Dienst, bei dem sich der Benutzer authentisieren möchte. In der Praxis ist die AppID häufig (aber nicht immer) einfach der URL des Webdienstes. (Beispielsweise: www.firmenname.de). Der AAID (Authentikator Attestation Identifier) ist eine eindeutige Kennzeichnung für einen Typ eines Authentikators. Er besteht aus vorzugsweise einem Hersteller- und Produkt-Identifier.

Schritt 103: In diesem Schritt wird geprüft, ob der Authentikator von der Relying Party akzeptiert wird. Dazu wird die Policy der Relying Party in der Authentisierungsanfrage dahingehend geprüft, ob der AAID (Authenticator Attestation Identifier) in der Liste der erlaubten Authentikatoren enthalten ist. In diesem Fall ergibt die Prüfung, dass das Vorweisen einer EMV-Karte unterstützt wird. Erfolgt die Authentisierung etwa mittels einer EMV-Karte, wird geprüft, ob die von der Relying Party übersandten Kriterien für die Auswahl eines Authentikators die Verwendung einer EMV-Karte zulassen.

Schritt 104: Der Benutzer gibt ein selbst gewähltes Passwort ein, das er bei der Registrierung vergeben hat.

Schritt 105: Der Client fordert vom Tokenserver eine EMV-Challenge an.
EMV-Challenge := {"unpredictable number" (mindestens 4 Byte) und optional weitere Daten, wie Geldbetrag, Transaktionsdaum}

Die EMV-Challenge wird in einem späteren Schritt von der EMV-Karte signiert. Mit Hilfe der Signatur kann dann der Tokenserver nachprüfen, dass am Client tatsächlich die EMV-Karte "vorgezeigt" wurde. Da die EMV-Challenge mindestens "4 byte unpredictable number" enthält, kann ein Trojaner/Angreifer auf dem Client keinen Replay-Angriff durchführen, d.h. das Vorweisen der EMV-Karte ist unverzichtbar.

Schritt 106: Der Client erhält eine EMV-Challenge vom Tokenserver.

Schritt 107: Der Benutzer wird aufgefordert, die EMV-Karte gegenüber dem Client vorzuweisen (kontaktlos: an den Client halten; kontaktbehaftet: in den Kartenleser einstecken). Sobald eine Verbindung zwischen Client und EMV-Karte hergestellt ist, wird eine Standard-EMV-Authentisierung durchgeführt (Typ: "dynamic data authentication" oder "combined DDA/AC generation").

Im Rahmen dieser EMV-Authentisierung erhält der Client zunächst zwei Zertifikate von der EMV-Karte:
1. (EMV-)IssuerPKCert := {Issuer Public Key, Signatur mit Payment Scheme Private Key}
2. (EMV-)CardPKCert := {Card Public Key, Personal Account Number (PAN), PAN-Sequence number (optional), Expirydate, Signatur mit Issuer Private Key}

Anschließend sendet der Client die EMV-Challenge an die EMV-Karte und erhält die EMV- Authentication Data zurück, die unter anderem eine von der EMV-Karte berechnet Signatur über die EMV-Challenge enthalten, insbesondere also auch über die Unpredictable Number:
3. EMV-Authentication data := {Unpredictable Number , Signatur mit Card Private Key}

Der Client kann obige Daten nur entgegennehmen, aber nicht nachprüfen, da der dazu notwendige "Payment Scheme Public Key" nicht vorliegt. Stattdessen erfolgt die Prüfung später im Tokenserver.

Schritt 108: Die zur Prüfung der EMV-Authentisierung sowie zur Durchführung der verbleibenden Schritte der FIDO-Authentisierung notwendigen Daten werden an den Tokenserver übermittelt:
- IssuerPKCert (EMV)
- CardPKCert (EMV)
- EMV-Authentication data (EMV)
- FIDO Authentication Request (gemäß FIDO, u.a. mit AppID, FIDO Challenge)
- (ggf. weitere Daten).

Schritt 109: Der Tokenserver prüft
- IssuerPKCert mit Hilfe des vorliegenden "Payment Scheme Public Key".
- CardPKCert mit Hilfe des nun geprüften "Issuer Public Key".
- EMV Authentication Data mit Hilfe des nun geprüften "Card Public Key".

Sind alle Prüfungen erfolgreich, ist sichergestellt, dass die EMV Authentication Data von einer echten EMV-Karte stammen bzw. signiert wurden, d.h. die entsprechende EMV-Karte wurde tatsächlich vorgewiesen. Der Tokenserver hat sich dabei insbesondere davon überzeugt, dass die Daten Primary Account Number, PAN Sequence Number (optional) und Expiry Date, welche eine EMV-Karte eindeutig identifizieren, von der verwendeten EMV-Karte stammen.

Schritt 110: Der Tokenserver leitet den User Private Key (zur Durchführung der Authentisierung gemäß FIDO UAF) und die Key-ID (identifiziert den Schlüssel gemäß FIDO UAF Protokoll) aus folgenden Daten ab:
- Master Key des Tokenserver
- Primary Account Number (PAN)
- Passwort, bzw. Passwort-Hash des Users
- App-ID der Relying Party (identifiziert den Web-Service, gegenüber dem eine Authentisierung durchgeführt wird)
- (optional) PAN Sequence Number
- (optional) Expiry Date
- (optional) weitere Daten.

Zu beachten ist, dass alle RP- bzw. benutzerspezifischen Daten, die zur Schlüsselableitung verwendet werden, von der Relying Party (App-ID), bzw. vom User (Passwort) und der EMV-Karte stammen. Aus dem Tokenserver fließen in die Schlüsselableitung nur nicht individuelle Daten ein, insbesondere der Master Key. Somit entfällt die Notwendigkeit einer Benutzerdatenbank im Tokenserver, womit dieser deutlich einfacher und kostengünstiger ist als die sonst üblichen Server. Auch eine Verwaltung der Benutzerdaten entfällt, da diese überhaupt nicht vorhanden sind. Optional können auf dem Tokenserver aber zusätzlich Daten gespeichert werden, um erweiterte Funktionalität zu ermöglichen.

Optional kann die Ableitung der Key-ID ausschließlich durch die App-ID und die Daten der EMV-Karte, ohne Einbeziehung des User Passwortes erfolgen, die Ableitung des Authentisierungsschlüssels aber mit Einbeziehung des User Passwortes. Damit ergibt sich bei unterschiedlichen Passworten trotz unterschiedlicher Authentisierungsschlüssel eine identische Key-ID und die Relying Party kann dadurch fehlgeschlagene Authentisierungsversuche, wie sie z.B. bei einer Brute-Force Attacke mit einer dem Benutzer entwendeten Karte vorkommen, erkennen und einem Account zuordnen und entsprechend reagieren, z.B. Sperrung des Accounts für eine bestimmte Zeit.

Die Prüfung, ob die AppID, User Passwort und die verwendete Karte identisch sind zu den bei der Registrierung verwendeten Werten, erfolgt implizit, da bei falschen Werten die Schlüsselableitung zu einem bei der Relying Party nicht registrierten Schlüssel führt und damit zu einer ungültigen Signatur, was seitens der Relying Party in Schritt 14 erkannt und abgewiesen wird.

Um die Sicherheit des Dienstes zu gewährleisten, muss gemäß einem Aspekt der vorliegenden Erfindung jedoch der Tokenserver Master Key sicher verwahrt werden. Hierfür bietet sich ein HSM (Hardware Security Module) an.

Schritt 111: Mit Hilfe des nun vorliegenden User Private Key wird die erforderliche FIDO Authentication Response Message erzeugt. Hierbei handelt es sich um eine Signatur mit Hilfe des User Private Key über die vom Client an den Tokenserver gemäß FIDO UAF Protokoll übertragenen Daten, diese enthalten insbesondere:
- Hash(AppID, FacetlD (=ID der aufrufenden Applikation), Challenge vom FIDO Server)
- KeylD - hierdurch wird der Relying Party ermöglicht, den für den User aufseiten der Relying Party gespeicherten Public Key zu identifizieren, (ggf. weitere Daten gemäß FIDO UAF, wie optionale Transaktionsdaten, channel binding)

Schritt 112 und 113: Die FIDO Authentication Response Message wird vom Tokenserver an den Client gesendet (Schritt 12) und von dort aus zusammen mit weiteren Daten an die Relying Party (Schritt 13).

Schritt 114: Die Relying Party prüft - unter anderem - die (Signatur der) FIDO Authentication Response Message mit Hilfe des zu dem User Private Key korrespondierenden öffentlichen Benutzerschlüssels, d.h. des User Public Key, welcher über die KeyID in der FIDO Response identifiziert wird. Dies entspricht vorzugsweise dem FIDO-Standard und wird deshalb nicht weiter im Detail erklärt. Hat der Anwender ein falsches Passwort eingegeben, die Authentisierung gegenüber einem falschen Webservice (falsche AppID) oder mit einer falschen Karte durchgeführt, dann schlägt die Authentisierung fehl.

Der Fachmann erkennt hierbei, dass die Verfahrensschritte 101 bis 114 weitere Verfahrensschritte umfassen können. Die beschriebene Sequenz von Verfahrensschritten kann als ein Nachrichtenprotokoll implementiert werden. Ferner ist es möglich, den Datenträger als ein embedded Secure Element auszugestalten und dieses Sicherheitselement beispielsweise in ein mobiles Endgerät fest, also einstückig, zu integrieren.

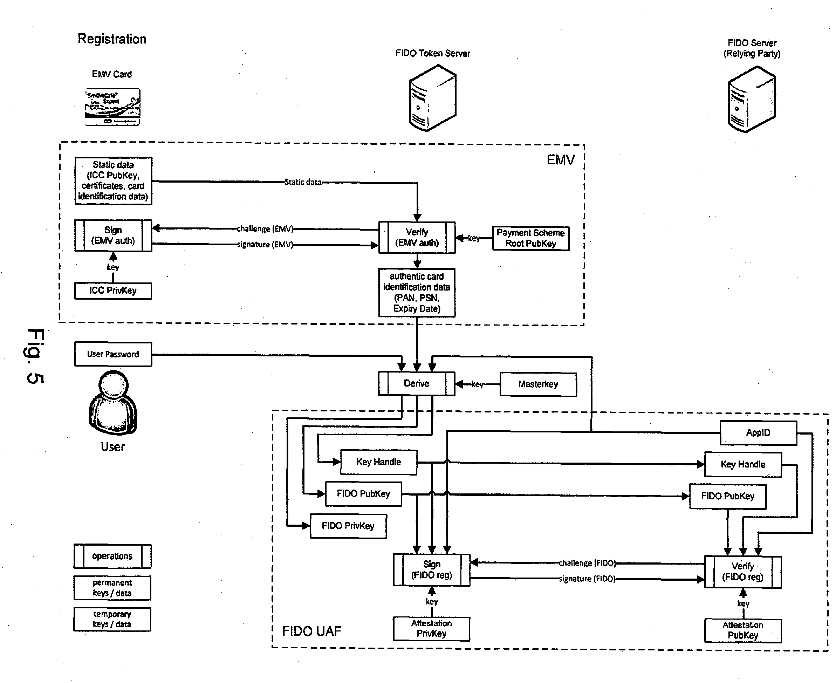

Fig. 5 zeigt ein schematisches Ablaufdiagramm eines Registrationsprozesses gemäß einem Aspekt des Verfahrens zur Durchführung einer kryptographisch gesicherten Authentisierung. Hierbei ist links oben der Datenträger als EMV-Karte angetragen, in der Mitte oben der Tokenserver und auf der rechten Seite oben die Relying Party als ein FIDO-Server.

In Figur 5 ist der Nachrichtenfluss verdeutlicht, welcher beispielhaft zur Realisierung des vorgeschlagenen Verfahrens Einsatz findet. Die verwendeten Parameter bzw. Nachrichtenbezeichnungen gemäß den Figuren 5, 6, 7 und 8 entsprechen hierbei den eingangs eingeführten FIDO-Spezifikationen.

In Fig. 5 nicht eingezeichnet ist der Client, welcher aber dadurch impliziert ist, dass die EMV-Karte in einen Nachrichtenaustausch mit dem Tokenserver tritt. Die verwendeten Nachrichten entsprechen den Parametern, wie sie im Kontext der Figur 4 eingeführt wurden.

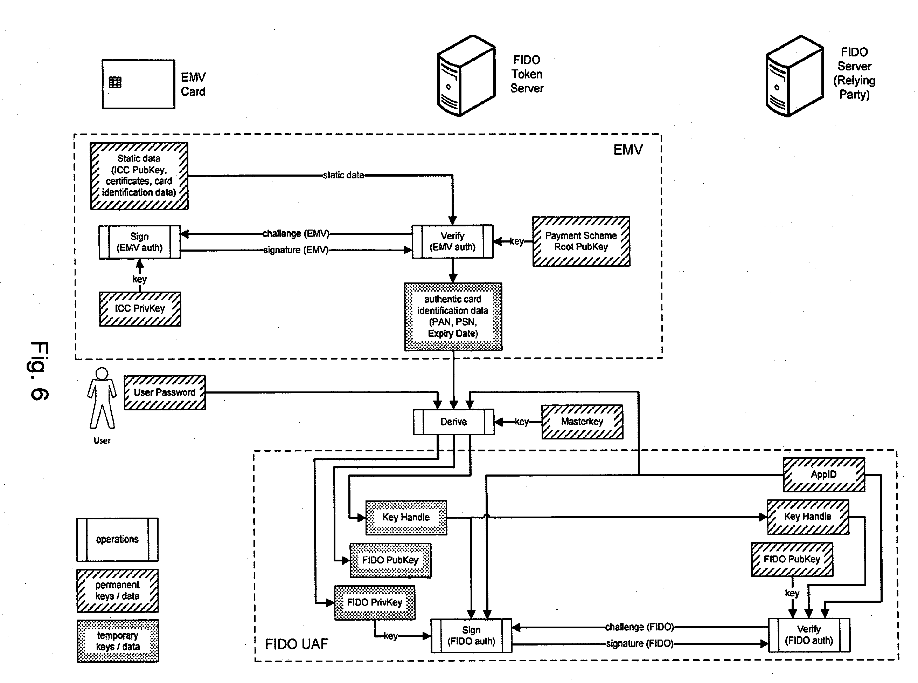

Figur 6 zeigt ebenfalls ein schematisches Ablaufdiagramm einer Authentisierung gemäß dem vorgeschlagenen Verfahren zur Durchführung einer kryptographisch gesicherten Authentisierung. Hierbei werden wiederum die bereits im Kontext der Figur 4 eingeführten Parameter verdeutlicht und insbesondere wird der Nachrichtenaustausch zwischen den beteiligten Komponenten verdeutlicht.

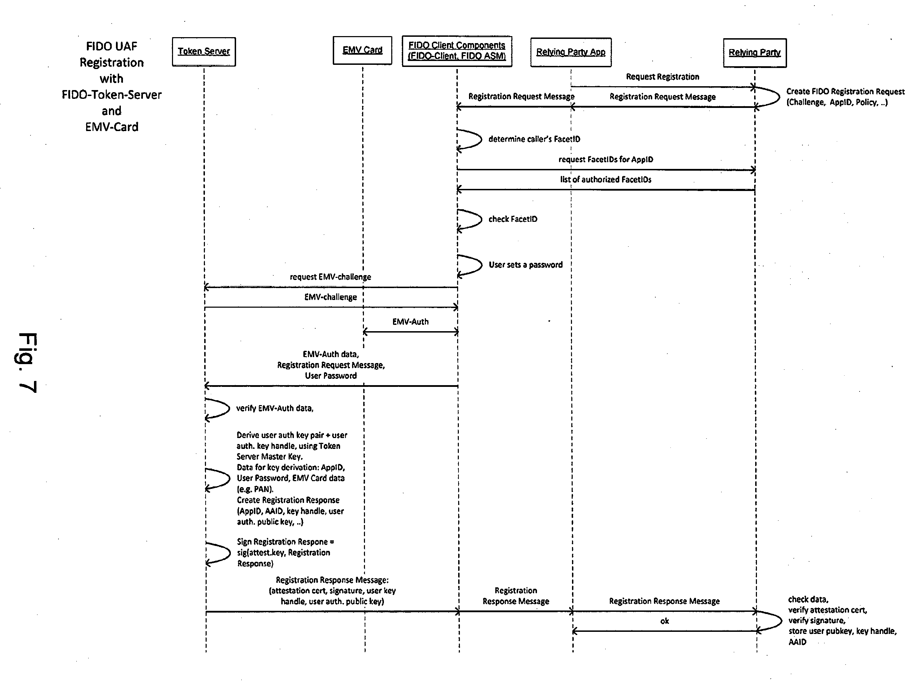

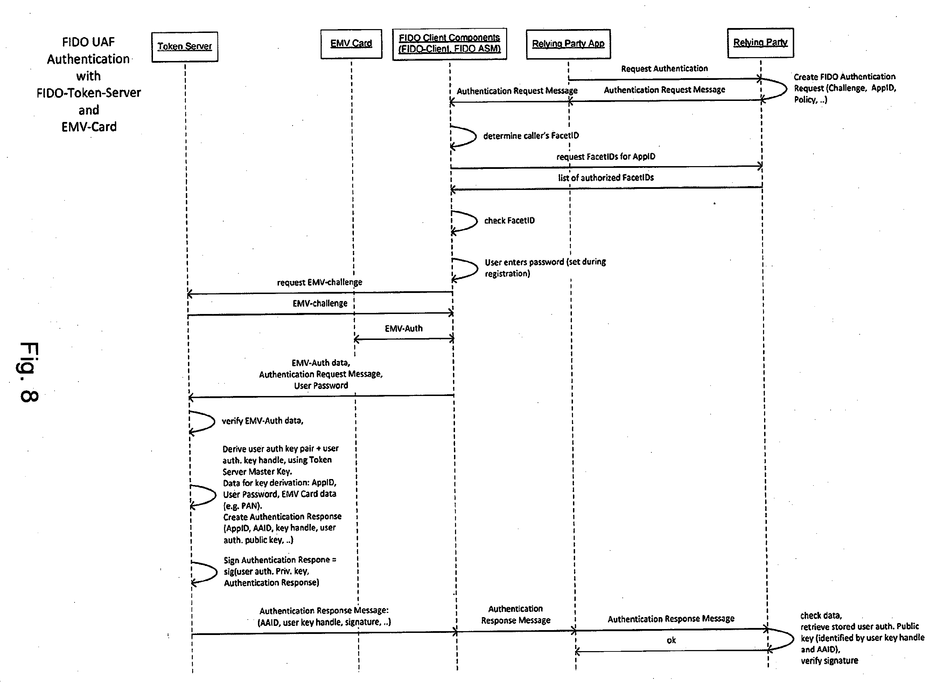

Die Figuren 7 und 8 zeigen jeweils ein Sequenzdiagramm, welche jeweils Ausführungsformen des Ablaufs gemäß Fig. 4 darstellen. Wie aus den Figuren 7 und 8 ersichtlich ist, entspricht die EMV-Karte dem Datenträger, wobei der Client als ein FIDO-Client mit mehreren Komponenten vorliegt. Auch die Relying Party wurde derart detaillierter dargestellt, dass sich diese in eine Applikation (Relying Party App), die clientseitig auf dem Gerät des Benutzers vorhanden ist und in einen Server aufspaltet. Hierbei kann es sich bei der rechts eingezeichneten Relying Party auch um einen Server im Sinne eines Softwareprozesses handeln. Da der Nachrichtenfluss im Wesentlichen dem Nachrichtenfluss der Fig. 4 gleicht, wird zur Beschreibung der vorliegenden Sequenzdiagramme auf die Beschreibung gemäß Fig. 4 verwiesen. So werden die Schritte 101 bis 114 gemäß Fig. 4 in den Figuren 7 und 8 aufgegriffen und mit der jeweils technischen Bezeichnung dargestellt. Somit können die jeweiligen Nachrichtenübermittlungen gemäß Figuren 7 und 8 in einfacher Weise den Verfahrensschritten 101 bis 114 zugeordnet werden.

Generell weist das vorgeschlagene Verfahren einige technische Vorteile gegenüber dem Stand der Technik auf, welche lediglich beispielhaft im Folgenden nochmals zusammengefasst werden.

EMV-Karten können nun als primärer Authentisierungsfaktor für FIDO UAF verwendet werden, auch wenn sie nicht über die für FIDO erforderlichen kryptographischen Fähigkeiten verfügen. Somit entfällt für viele Personen die Notwendigkeit, ein "2. Device" zu beschaffen und bereitzuhalten. Da es sich um eine primäre Authentisierung handelt, muss sich der Anwender keinen Benutzernamen mehr merken, denn der Benutzer ist implizit nach der erfolgreichen Authentisierung identifiziert. Die Verwaltung von sicherheitskritischen Zugangsdaten (z.B. Entsperren von Passwörtern) auf Seiten der Relying Party entfällt, da gegenüber der Relying Party die Authentisierung nur mithilfe eines kryptographischen Schlüssels erfolgt. Auch aufseiten des Client muss keine Verwaltung eines Passwortes erfolgen, da sich bei Verwendung eines fehlerhaften Passwortes automatisch eine ungültige Signatur ergibt. Die Zustimmung der Card Issuer ist dafür nicht notwendig, das Verfahren ist also bereits implementierbar. Der erforderliche Token Server benötigt keine Datenbank, ist demnach einfach und kostengünstig. Lediglich ein HSM zur Aufbewahrung des Token Server Master Key ist angeraten.

Das Verfahren ist ferner sicher gegen Trojaner auf dem Client hinsichtlich des Diebstahls sensitiver Daten, da auf dem Client keinerlei Daten gespeichert werden. Das Verfahren erlaubt den Wechsel des Client, ohne dass Daten von einem Client auf den anderen transferiert werden müssen. Kontaktlose EMV-Karten müssen nur sehr kurz in die Nähe des Client gehalten werden; dies hält die Wahrscheinlichkeit von unabsichtlich unterbrochenen Authentisierungen gering. Die FIDELIO/nPA-Lösung erfordert aufgrund des Datentransfers im Hintergrund eine längere Transaktionszeit mit dem nPA. Das Verfahren lässt sich perspektivisch auch auf andere Kartentypen und andere Protokolle erweitern.

## Patentansprüche

1. Verfahren zur Durchführung einer kryptographisch gesicherten Authentisierung zwischen einem Client und einer Relying Party mittels eines Authentikators, aufweisend die Schritte:
- Anfragen (101) der Authentisierung durch den Client bei der Relying Party;
- Übermitteln (102) einer ersten Challenge-Nachricht, einer Dienstidentifikation (AppID) eines Dienstes, bei dem der Client die Authentisierung anfragt und wenigstens eines Kriteriums für die Auswahl eines akzeptierten Authentikatortyps (AAID) von der Relying Party an den Client;
- Prüfen (103) durch den Client anhand des mindestens einen übermittelten Kriteriums, ob ein Authentikator eines akzeptierten Authentikatortyps (AAID) vorhanden ist, wobei bei Vorhandensein eines Authentikators eines akzeptierten Authentikatortyps (AAID) das Verfahren fortgesetzt und ansonsten eine Fehlerroutine gestartet wird;
- Bereitstellen (104) eines Passworts, das der Benutzer bei einer vorgeschalteten Registrierung vergeben hat, durch den Benutzer unter Verwendung des Clients;
- Anfordern (105) einer zweiten Challenge-Nachricht bei einem Tokenserver durch den Client und anschließendes Übermitteln (106) der angeforderten (105) zweiten Challenge-Nachricht von dem Tokenserver an den Client;
- Übermitteln der zweiten Challenge-Nachricht vom Client an den Authentikator;
- Erstellen von Authentisierungsinformationseinheiten in Abhängigkeit von der zweiten Challenge-Nachricht durch den Authentikator;
- Übermitteln (107) der Authentisierungsinformationseinheiten von dem Authentikator an den Client;
- Weiterleiten (108) mindestens einer Auswahl der übermittelten (107) Authentisierungsinformationseinheiten an den Tokenserver;
- Überprüfen (109) der Auswahl der weitergeleiteten (108) Authentisierungsinformationseinheiten durch den Tokenserver;
- Berechnen (110) eines privaten Benutzerschlüssels, User Private Key, anhand von Daten, welche von dem Authentikator, dem Client und/ oder der Relying Party an den Tokenserver übermittelt wurden, im Tokenserver;
- - Berechnen (111) einer Response-Nachricht unter Verwendung des berechneten (110) Benutzerschlüssels im Tokenserver;
- Übersenden (112) der Response-Nachricht von dem Tokenserver an den Client und Weiterleiten (113) mindestens der Response-Nachricht an die Relying Party; und
- Überprüfen (114) mindestens der Response-Nachricht durch die Relying Party und positives Authentisieren bei einem positiven Überprüfen (114) und Ausführen der Fehlerroutine bei einem negativen Überprüfen (114).

2. Verfahren gemäß Anspruch 1, **dadurch gekennzeichnet, dass** das Vorhandensein eines akzeptierten Authentikatortyps anhand einer Liste von für den Client verfügbaren Authentikatortypen (AAID) geprüft wird.

3. Verfahren gemäß Anspruch 1, **dadurch gekennzeichnet, dass** der Authentikator als ein tragbarer Datenträger, eine EMV-Karte, eine Smartcard, ein embedded Secure Element, eine Trusted Secure Environment oder in Gestalt einer Anwendung oder in Form von Steuerbefehlen vorliegt.

4. Verfahren gemäß Anspruch 1, **dadurch gekennzeichnet, dass** der Tokenserver ein Authentisierungs-Token in Abhängigkeit des bereitgestellten (104) Passworts erzeugt (109, 110, 111), wobei das Authentisierungs-Token erst in einem darauffolgenden Verfahrensschritt (114) von der Relying Party geprüft (114) wird.

5. Verfahren nach einem der vorhergehenden Ansprüche, **dadurch gekennzeichnet, dass** die Fehlerroutine einen Abbruch des Verfahrens oder einen Neustart des Verfahrens auslöst.

6. Verfahren nach einem der vorhergehenden Ansprüche, **dadurch gekennzeichnet, dass** über die zweite Challenge-Nachricht eine Signatur berechnet wird.

7. Verfahren nach einem der vorhergehenden Ansprüche, **dadurch gekennzeichnet, dass** dem Übermitteln (107) von Authentisierungsinformationseinheiten von dem Authentikator an den Client eine Auswahl des Authentikators durch den Client vorgeschaltet ist.

8. Verfahren nach Anspruch 7, **dadurch gekennzeichnet, dass** während der weiteren Authentisierung der Client von dem Authentikator Zertifikate empfängt.

9. Verfahren nach einem der vorhergehenden Ansprüche, **dadurch gekennzeichnet, dass** das bereitgestellte (104) Passwort an den Tokenserver übermittelt wird.

10. Verfahren nach einem der vorhergehenden Ansprüche, **dadurch gekennzeichnet, dass** das Berechnen (110) des Benutzerschlüssels ein Berechnen eines Schlüsselidentifikators umfasst, wobei das bereitgestellte (104) Passwort Verwendung finden kann.

11. Verfahren nach einem der vorhergehenden Ansprüche, wobei ein Embedded Secure Element als Authentikator verwendet wird.

12. Systemanordnung zur Durchführung einer kryptographisch gesicherten Authentisierung zwischen einem Client und einer Relying Party mittels eines Authentikators, aufweisend:
- den Client eingerichtet zum Anfragen (101) der Authentisierung bei der Relying Party;
- die Relying Party eingerichtet zum Übermitteln (102) einer ersten Challenge-Nachricht, einer Dienstidentifikation (AppID) eines Dienstes, bei dem der Client die Authentisierung anfragt, und von Kriterien für die Auswahl von akzeptierten Authentikatortypen an den Client;
- den Client eingerichtet zum Prüfen (103) des Vorhandenseins eines akzeptierten (102) Authentikatortyps, wobei bei Vorhandensein eines akzeptierten Authentikatortyps dieser unterstützt wird und ansonsten eine Fehlerroutine gestartet wird;
- den Client eingerichtet zum Bereitstellen (104) eines vom Benutzer bei einer vorgeschalteten Registrierung vergebenen Passworts durch den Benutzer;
- den Client eingerichtet zum Anfordern (105) einer zweiten Challenge-Nachricht bei einem Tokenserver und den Tokenserver eingerichtet zum anschließenden Übermitteln (106) der angeforderten (105) zweiten Challenge-Nachricht von dem Tokenserver an den Client;
- den Client eingerichtet zum Übermitteln der zweiten Challenge-Nachricht an den Authentikator;
- den Authentikator eingerichtet zum Erstellen von Authentisierungsinformationseinheiten in Abhangigkeit von der zweiten Challenge-Nachricht;
- den Authentikator eingerichtet zum Übermitteln (107) von Authentisierungsinformationseinheiten von dem Authentikator an den Client;
- den Client eingerichtet zum Weiterleiten (108) mindestens einer Auswahl der übermittelten (107) Authentisierungsinformationseinheiten an den Tokenserver;
- den Tokenserver eingerichtet zum Überprüfen (109) einer Auswahl der weitergeleiteten (108) Authentisierungsinformationseinheiten;
- den Tokenserver eingerichtet zum Berechnen (110) eines privaten Benutzerschlüssels (User Private Key) anhand von Daten, welche von dem Authentikator, dem Client und/ oder der Relying Party an den Tokenserver übermittelt wurden;
- den Tokenserver eingerichtet zum Berechnen (111) einer Response-Nachricht unter Verwendung des berechneten (110) Benutzerschlüssels;
- den Tokenserver eingerichtet zum Übersenden (112) der Response-Nachricht von dem Tokenserver an den Client und Weiterleiten (113) mindestens der Response-Nachricht über den Client an die Relying Party; und
- die Relying Party eingerichtet zum Überprüfen (114) mindestens der Response-Nachricht unter Verwendung des Benutzerschlüssels und zum positiven Authentisieren bei einem positiven Überprüfen (114) und zum Ausführen der Fehlerroutine bei einem negativen Überprüfen (114).

13. Computerprogrammprodukt mit Steuerbefehlen, welche das Verfahren gemäß einem der Ansprüche 1 bis 11 ausführen, wenn sie auf einem Computer zur Ausführung gebracht werden.

## Claims

1. A method for carrying out a cryptographically secured authentication between a client and a relying party by means of an authenticator, having the steps of:
- querying (101) the authentication by the client at the relying party;
- transmitting (102) a first challenge message, a service identifier (AppID) of a service at which the client queries the authentication and at least one criterion for selecting an accepted authenticator type (AAID) from the relying party to the client;
- checking (103) by the client on the basis of the at least one transmitted criterion whether an authenticator of an accepted authenticator type (AAID) is present, wherein in the presence of an authenticator of an accepted authenticator type (AAID) the method is continued and otherwise an error routine is started;
- supplying (104), through the user while employing the client, a password assigned by the user upon a prior registration;
- requesting (105) a second challenge message at a token server by the client and subsequent transmitting (106) of the requested (105) second challenge message from the token server to the client;
- transmitting the second challenge message from the client to the authenticator;
- creating authentication information units in dependence on the second challenge message by the authenticator;
- transmitting (107) the authentication information units from the authenticator to the client;
- forwarding (108) at least a selection of the transmitted (107) authentication information units to the token server;
- verifying (109) the selection of the forwarded (108) authentication information units by the token server;
- computing (110) in the token server a private user key, User Private Key, on the basis of data transmitted from the authenticator, the client and/or the relying party to the token server;
- computing (111) in the token server a response message while employing the computed (110) user key;
- sending (112) the response message from the token server to the client and forwarding (113) at least the response message to the relying party; and
- verifying (114) at least the response message by the relying party and positively authenticating upon a positive verification (114) and executing the error routine upon a negative verification (114).

2. The method according to claim 1, **characterized in that** the presence of an accepted authenticator type is checked on the basis a list of authenticator types (AAID) available for the client.

3. The method according to claim 1, **characterized in that** the authenticator is present as a portable data carrier, an EMV card, a smart card, an embedded secure element, a trusted secure environment or in the form of an application or in the form of control commands.

4. The method according to claim 1, **characterized in that** the token server generates (109, 110, 111) an authentication token in dependence on the supplied (104) password, wherein the authentication token is checked (114) by the relying party only in a subsequent method step (114).

5. The method according to any of the preceding claims, **characterized in that** the error routine triggers an abortion of the method or a restart of the method.

6. The method according to any of the preceding claims, **characterized in that** a signature is computed over the second challenge message.

7. The method according to any of the preceding claims, **characterized in that** the transmission (107) of authentication information units from the authenticator to the client is preceded by a selection of the authenticator by the client.

8. The method according to claim 7, **characterized in that** during the further authentication the client receives certificates from the authenticator.

9. The method according to any of the preceding claims, **characterized in that** the supplied (104) password is transmitted to the token server.

10. The method according to any of the preceding claims, **characterized in that** the computing (110) of the user key comprises computing a key identifier, wherein the supplied (104) password can be employed.

11. The method according to any of the preceding claims, wherein an embedded secure element is employed as authenticator.

12. A system arrangement for carrying out a cryptographically secured authentication between a client and a relying party by means of an authenticator, having:
- the client adapted to query (101) the authentication at the relying party;
- the relying party adapted to transmit (102) a first challenge message, a service identifier (AppID) of a service at which the client queries authentication, and criteria for selecting accepted authenticator types to the client;
- the client adapted to check (103) for the presence of an accepted (102) authenticator type, wherein, in the presence of an accepted authenticator type, said authenticator type is supported and otherwise an error routine is started;
- the client adapted to supply (104) through the user a password assigned by the user upon a prior registration;
- the client adapted to request (105) a second challenge message at a token server and the token server adapted to subsequently transmit (106) the requested (105) second challenge message from the token server to the client;
- the client adapted to transmit the second challenge message to the authenticator;
- the authenticator adapted to create authentication information units in dependence on the second challenge message;
- the authenticator adapted to transmit (107) authentication information units from the authenticator to the client;
- the client adapted to forward (108) at least a selection of the transmitted (107) authentication information units to the token server;
- the token server adapted to verify (109) a selection of the forwarded (108) authentication information units;
- the token server adapted to compute (110) a private user key (User Private Key) on the basis of data transmitted from the authenticator, the client and/or the relying party to the token server;
- the token server adapted to compute (111) a response message while employing the computed (110) user key;
- the token server adapted to send (112) the response message from the token server to the client and forward (113) at least the response message via the client to the relying party; and
- the relying party adapted to verify (114) at least the response message while employing the user key and to positively authenticate upon a positive verification (114) and to execute the error routing upon a negative verification (114).

13. A computer program product with control commands which execute the method according to any of claims 1 to 11 when these are brought to execution on a computer.

## Revendications

1. Procédé de réalisation d'une authentification cryptographiquement sécurisée entre un client et une Partie de confiance au moyen d'un authentifieur, comportant les étapes :
- demande (101), par le client, de l'authentification à la Partie de confiance ;
- transmission (102) d'un premier message d'essai, d'une identification de service (AppID) d'un service auprès duquel le client demande l'authentification, et d'au moins un critère pour la sélection d'un type accepté d'authentifieur (AAID), de la Partie de confiance au client ;
- examen (103) par le client, au moyen du au moins un critère transmis, afin de discerner s'il y a un authentifieur d'un type accepté d'authentifieur (AAID), cependant que, s'il y a un authentifieur d'un type accepté d'authentifieur (AAID), le procédé est poursuivi, et sinon une routine de gestion d'erreur est démarrée ;
- mise à disposition (104) d'un mot de passe que l'utilisateur a défini lors d'un enregistrement préalable, par l'utilisateur en utilisant le client ;
- sollicitation (105) d'un deuxième message d'essai auprès d'un serveur à jeton par le client, et transmission (106) subséquente du deuxième message d'essai sollicité (105) du serveur à jeton au client ;
- transmission du deuxième message d'essai du client à l'authentifieur :
- création d'unités d'information d'authentification en fonction du deuxième message d'essai, par l'authentifieur ;
- transmission (107) des unités d'information d'authentification de l'authentifieur au client ;
- transfert (108), au serveur à jeton, d'au moins une sélection des unités d'information d'authentification transmises (107) ;
- vérification (109) de la sélection des unités d'information d'authentification transférées (108) par le serveur à jeton ;
- calcul (110) d'une clé privée d'utilisateur, User Private Key, à l'aide de données qui furent transmises de l'authentifieur, du client et/ou de la Partie de confiance au serveur à jeton, dans le serveur à jeton ;
- calcul (111) d'un message de réponse en utilisant la clé d'utilisateur calculée (110), dans le serveur à jeton ;
- envoi (112) du message de réponse du serveur à jeton au client, et transfert (113) d'au moins le message de réponse à la Partie de confiance ; et
- vérification (114) d'au moins le message de réponse par la Partie de confiance et authentification positive en cas d'une vérification (114) positive, et exécution de la routine de gestion d'erreur en cas d'une vérification (114) négative.

2. Procédé selon la revendication 1, **caractérisé en ce que** c'est à l'aide d'une liste de types d'authentifieurs (AAID) disponibles pour le client qu'il est vérifié s'il y a un type accepté d'authentifieur.

3. Procédé selon la revendication 1, **caractérisé en ce que** l'authentifieur se trouve sous forme d'un support de données portable, d'une carte EMV, d'une carte à puce, d'un élément de sécurité intégré, d'un environnement fiable et sécurisé, ou sous forme d'une application ou d'instructions de commande.

4. Procédé selon la revendication 1, **caractérisé en ce que** le serveur à jeton génère (109, 110, 111) un jeton d'authentification en fonction du mot de passe mis à disposition (104), cependant que le jeton d'authentification n'est examiné (114) par la Partie de confiance que lors d'une étape suivante (114) à cela du procédé.

5. Procédé selon une des revendications précédentes, **caractérisé en ce que** la routine de gestion d'erreur déclenche un arrêt du procédé ou un redémarrage du procédé.

6. Procédé selon une des revendications précédentes, **caractérisé en ce que**, par l'intermédiaire du deuxième message d'essai, une signature est calculée.

7. Procédé selon une des revendications précédentes, **caractérisé en ce que**, préalablement à la transmission (107) d'unités d'information d'authentification de l'authentifieur au client, une sélection de l'authentifieur par le client est effectuée.

8. Procédé selon la revendication 7, **caractérisé en ce que**, pendant la poursuite de l'authentification, le client reçoit des certificats de la part de l'authentifieur.

9. Procédé selon une des revendications précédentes, **caractérisé en ce que** le mot de passe mis à disposition (104) est transmis au serveur à jeton.

10. Procédé selon une des revendications précédentes, **caractérisé en ce que** le calcul (110) de la clé d'utilisateur comprend un calcul d'un identificateur de clé, cependant que le mot de passe mis à disposition (104) peut trouver utilisation.

11. Procédé selon une des revendications précédentes, cependant qu'un élément de sécurité intégré est utilisé comme authentifieur.

12. Agencement de système destiné à la réalisation d'une authentification cryptographiquement sécurisée entre un client et une Partie de confiance au moyen d'un authentifieur, comportant :
- le client, équipé pour demander (101) l'authentification à la Partie de confiance ;
- la Partie de confiance, équipée pour transmettre (102) un premier message d'essai, une identification de service (AppID) d'un service auprès duquel le client demande l'authentification, et des critères pour la sélection de types acceptés d'authentifieur, au client ;
- le client, équipé pour examiner (103) s'il y a un type accepté (102) d'authentifieur, cependant que, s'il y a un type accepté d'authentifieur, ce dernier est supporté, et sinon une routine de gestion d'erreur est démarrée ;
- le client, équipé pour mettre à disposition (104) un mot de passe défini par l'utilisateur lors d'un enregistrement préalable par l'utilisateur ;
- le client, équipé pour solliciter (105) un deuxième message d'essai auprès d'un serveur à jeton, et le serveur à jeton, équipé pour transmettre (106) subséquemment le deuxième message d'essai sollicité (105) du serveur à jeton au client ;
- le client, équipé pour transmettre le deuxième message d'essai à l'authentifieur :
- l'authentifieur, équipé pour créer des unités d'information d'authentification en fonction du deuxième message d'essai,
- l'authentifieur, équipé pour transmettre (107) des unités d'information d'authentification de l'authentifieur au client ;
- le client, équipé pour transférer (108) au serveur à jeton au moins une sélection des unités d'information d'authentification transférées (107) ;
- le serveur à jeton, équipé pour vérifier (109) une sélection des unités d'information d'authentification transférées (108) ;
- le serveur à jeton, équipé pour calculer (110) une clé privée d'utilisateur (User Private Key) à l'aide de données qui furent transmises de l'authentifieur, du client et/ou de la Partie de confiance au serveur à jeton ;
- le serveur à jeton, équipé pour calculer (111) un message de réponse en utilisant la clé d'utilisateur calculée (110) ;
- le serveur à jeton, équipé pour envoyer (112) le message de réponse du serveur à jeton au client, et transférer (113) au moins le message de réponse par l'intermédiaire du client à la Partie de confiance ; et
- la Partie de confiance, équipée pour vérifier (114) au moins le message de réponse en utilisant la clé d'utilisateur et pour authentifier positivement en cas d'une vérification (114) positive, et pour exécuter la routine de gestion d'erreur en cas d'une vérification (114) négative.

13. Produit programme d'ordinateur ayant des instructions de commande qui exécutent le procédé selon une des revendications de 1 à 11 quand elles sont amenées à exécution sur un ordinateur.
